# EUROPEAN PATENT APPLICATION

(11) **EP 4 632 895 A1**
(43) Date of publication of application: **15.10.2025**
(21) Application number: 23913986.8
(22) Date of filing: 04.01.2023
(51) Int. Cl.: H01M 50/20

(54) **BATTERY CELL, BATTERY, AND ELECTRIC APPARATUS**

(71) Applicant: Contemporary Amperex Technology Co., Limited, Fujian 352100 (CN)
(72) Inventor: HUANG, Shoujun, Ningde City, Fujian 352100 (CN); CHEN, Long, Ningde City, Fujian 352100 (CN); LIN, Denghua, Ningde City, Fujian 352100 (CN); ZHENG, Yulian, Ningde City, Fujian 352100 (CN); WANG, Peng, Ningde City, Fujian 352100 (CN); JIN, Haizu, Ningde City, Fujian 352100 (CN)
(74) Representative: Gong, Jinping
(86) International application number: PCT/CN2023/070467
(87) International publication number: WO 2024/145827

(57) **Abstract**

This application provides a battery cell, a battery, and an electric apparatus, pertaining to the field of battery technologies. The battery cell includes a casing, an electrode assembly, an electrode terminal, and a current collecting member. The casing has a first wall, and the electrode assembly is accommodated within the casing. The electrode terminal is disposed on the first wall, where along a thickness direction of the first wall, an end of the electrode terminal facing the electrode assembly is provided with a first recess, and an end of the electrode terminal facing away from the electrode assembly is connected to a busbar component. The current collecting member is connected to the electrode assembly, and at least part of the current collecting member is accommodated within the first recess and connected to a bottom of the first recess. With the first recess provided at the end of the electrode terminal facing the electrode assembly, there is no need to provide a recess and a cover plate for blocking the recess at the end of the electrode terminal connected to the busbar component, which is conducive to improving the connection stability between the electrode terminal and the busbar component, so as to reduce the risk of connection failure between the electrode terminal and the busbar component during use.

## Description

### TECHNICAL FIELD

This application relates to the field of battery technologies, and specifically to a battery cell, a battery, and an electric apparatus.

### BACKGROUND

In recent years, new energy vehicles have achieved leapfrog development. In the field of electric vehicles, power batteries, as the energy source of electric vehicles, play an irreplaceable and critical role. With the vigorous promotion of new energy vehicles, the demand for power battery products has been growing rapidly. As a core component of new energy vehicles, batteries are subject to stringent requirements in both safety and service life. The electrode assembly of a battery cell typically needs to be connected to an electrode terminal disposed on a casing through a current collecting member, and then connected to a busbar component within the battery through the electrode terminal, so as to enable the input or output of electric energy of the battery cell. However, in the prior art, the assembly difficulty between the current collecting member and the electrode terminal of the battery cell is relatively high, and the connection stability between the electrode terminal and the busbar component is relatively poor, resulting in issues such as low production efficiency and short service life of the battery cell.

### SUMMARY

Embodiments of this application provide a battery cell, a battery, and an electric apparatus, which can effectively improve the production efficiency and service life of the battery cell.

According to a first aspect, an embodiment of this application provides a battery cell, including: a casing having a first wall; an electrode assembly accommodated within the casing; an electrode terminal disposed on the first wall, where along a thickness direction of the first wall, an end of the electrode terminal facing the electrode assembly is provided with a first recess, and an end of the electrode terminal facing away from the electrode assembly is configured to connect to a busbar component; and a current collecting member connected to the electrode assembly, where at least part of the current collecting member is accommodated within the first recess and connected to a bottom of the first recess, so as to form electrical connection between the electrode assembly and the electrode terminal.

In the above technical solution, with the first recess provided at the end of the electrode terminal facing the electrode assembly along the thickness direction of the first wall, the bottom of the first recess of the electrode terminal is configured to connect to the current collecting member, and the end of the electrode terminal facing away from the electrode assembly along the thickness direction of the first wall is configured to connect to the busbar component, such that after at least part of the current collecting member is accommodated within the first recess and connected to the bottom of the first recess, electrical connection between the electrode assembly and the busbar component can be achieved. Specifically, the part of the current collecting member accommodated within the first recess is connected to a bottom wall of the first recess. The battery cell adopting this structure can reduce the thickness of the region of the electrode terminal used for connecting to the current collecting member, which is conducive to reducing the assembly difficulty between the electrode terminal and the current collecting member, thereby improving the production efficiency of the battery cell. In addition, since the first recess is provided at the end of the electrode terminal facing the electrode assembly, and part of the current collecting member is inserted into the first recess and connected to the electrode terminal, there is no need to provide a recess at the end of the electrode terminal configured to connect to the busbar component, nor is it necessary to connect a cover plate to the electrode terminal for blocking the recess, so that the busbar component can be directly connected to the electrode terminal. This is conducive to improving the connection strength and connection stability between the electrode terminal and the busbar component, so as to reduce the risk of connection failure between the electrode terminal and the busbar component during use, thereby ensuring the use stability of the battery cell and facilitating an improvement in the service life of the battery cell.

In some embodiments, along the thickness direction of the first wall, the electrode terminal has a first surface farthest from the electrode assembly, the first surface is configured to connect to the busbar component, a connecting portion is formed between the first surface and a bottom surface of the first recess, and the connecting portion is connected to the current collecting member.

In the above technical solution, a connecting portion connected to the current collecting member is formed between the first surface of the electrode terminal configured to connect to the busbar component and the bottom surface of the first recess, such that part of the electrode terminal located between the first surface and the bottom surface of the first recess is connected to the current collecting member, and a side of the connecting portion facing away from the current collecting member is part of the first surface. The battery cell adopting this structure facilitates the connection between the electrode terminal and the busbar component, which is conducive to reducing the assembly difficulty between the electrode terminal and the busbar component; and in addition, the area of the region where the electrode terminal and the busbar component are connected to each other can be effectively increased, and the structural strength and connection stability of the electrode terminal in connecting the current collecting member and the busbar component can be effectively enhanced, so as to further reduce the risk of connection failure between the electrode terminal and the busbar component during use.

In some embodiments, the first surface is a flat surface.

In the above technical solution, the first surface of the electrode terminal configured to connect to the busbar component is provided as a flat surface, which facilitates the connection between the electrode terminal and the busbar component and is conducive to improving the assembly quality between the electrode terminal and the busbar component.

In some embodiments, the connecting portion is welded to the current collecting member and forms a first weld mark, and along the thickness direction of the first wall, the first weld mark extends to the first surface.

In the above technical solution, the first weld mark formed by welding the connecting portion to the current collecting member extends to the first surface along the thickness direction of the first wall, such that a side of the connecting portion of the electrode terminal used for welding to the current collecting member facing away from the current collecting member along the thickness direction of the first wall is flush with the first surface, thereby effectively increasing the area of the first surface, so as to increase the connection area and contact area between the electrode terminal and the busbar component, thus facilitating the connection between the electrode terminal and the busbar component, which is conducive to reducing assembly difficulty and improving the connection quality between the electrode terminal and the busbar component.

In some embodiments, the first surface is configured to be welded to the busbar component and forms a second weld mark on the first surface, and along the thickness direction of the first wall, a projection of the second weld mark on the first surface does not overlap with a projection of the first weld mark on the first surface.

In the above technical solution, since both the first weld mark and the second weld mark are formed on the first surface of the electrode terminal, arranging the projection of the first weld mark and the projection of the second weld mark to be non-overlapping along the thickness direction of the first wall, without overlapping region between the first weld mark and the second weld mark, can effectively reduce the mutual influence between the first weld mark and the second weld mark, so as to reduce the risk of the second weld mark formed by welding the electrode terminal to the busbar component causing melt-through damage to the first weld mark, thereby effectively ensuring the connection quality between the electrode terminal and the current collecting member.

In some embodiments, the second weld mark surrounds the outside of the first weld mark.

In the above technical solution, the second weld mark is configured to surround the outer side of the first weld mark. Specifically, the second weld mark is an annular structure and located on the outer side of the first weld mark. The adoption of this structure ensures sufficient welding area between the connecting portion of the electrode terminal and the current collecting member, so as to ensure the connection strength between the electrode terminal and the current collecting member. In addition, since the current collecting member is welded to the electrode terminal first, and the busbar component is welded to the electrode terminal later, the battery cell adopting this structure is conducive to reducing the assembly difficulty between the electrode terminal and the busbar component.

In some embodiments, the first wall is provided with a lead-out hole; and the electrode terminal includes: a body portion, partially passing through the lead-out hole, where the first recess is provided in the body portion; a limiting portion, protruding from an outer peripheral surface of the body portion, where along the thickness direction of the first wall, the limiting portion is located on a side of the first wall facing away from the electrode assembly; and a riveting portion, protruding from the outer peripheral surface of the body portion, where along the thickness direction of the first wall, the riveting portion is located on a side of the first wall facing the electrode assembly.

In the above technical solution, the electrode terminal is provided with a body portion passing through the lead-out hole, and a limiting portion and a riveting portion are protrudingly provided on the outer peripheral surface of the body portion. The limiting portion and the riveting portion are respectively located on the side of the first wall facing away from the electrode assembly and the side facing the electrode assembly along the thickness direction of the first wall, so as to enable riveting fixation of the electrode terminal to the first wall. In addition, the first recess and the riveting portion of the electrode terminal with this structure are both located at the end of the electrode terminal facing the electrode assembly, so as to facilitate riveting the electrode terminal from the inside of the battery cell, and there is no need to form a riveting groove for riveting at the end of the electrode terminal facing away from the electrode assembly, thereby effectively ensuring the connection strength between the electrode terminal and the busbar component.

In some embodiments, the body portion, the limiting portion, and the riveting portion are an integrally formed structure.

In the above technical solution, the body portion, the limiting portion, and the riveting portion are an integrally formed structure. Specifically, the electrode terminal is an integral structure, so that the structural strength of the electrode terminal is enhanced, improving the connection stability and reliability between the electrode terminal and the current collecting member and between the electrode terminal and the busbar component, so as to reduce the risk of connection failure of the current collecting member and the busbar component during use, thereby ensuring the use stability of the battery cell and improving the service life of the battery cell.

In some embodiments, along the thickness direction of the first wall, a surface of the limiting portion facing away from the first wall is coplanar with a surface of the body portion facing away from the electrode assembly.

In the above technical solution, arranging the surface of the limiting portion facing away from the first wall and the surface of the body portion facing away from the electrode assembly to be coplanar with each other enables the surface of the end of the electrode terminal facing away from the electrode assembly to be a flat structure as a whole, which facilitates the connection between the electrode terminal and the busbar component and is conducive to reducing the assembly difficulty between the electrode terminal and the busbar component. In addition, the area of the region where the electrode terminal and the busbar component are connected to each other can be effectively increased, and the structural strength and connection stability of the electrode terminal connecting the current collecting member and the busbar component can be effectively enhanced, so as to further reduce the risk of connection failure between the electrode terminal and the busbar component during use.

In some embodiments, the first recess includes a first groove and a second groove, where along the thickness direction of the first wall, the second groove is provided on a bottom surface of the first groove, and a bottom of the second groove is connected to the current collecting member.

In the above technical solution, the first recess provided on the body portion of the electrode terminal includes the first groove and the second groove arranged along the thickness direction of the first wall, and the second groove is provided on the bottom surface of the first groove. This structure facilitates the formation of the riveting portion and the first groove after the electrode terminal is riveted from inside the battery cell, which is conducive to reducing the assembly difficulty of the electrode terminal on the first wall.

In some embodiments, along the thickness direction of the first wall, the limiting portion has a second surface closest to the electrode assembly, and a bottom surface of the first recess is farther away from the electrode assembly than the second surface, or the bottom surface of the first recess is flush with the second surface.

In the above technical solution, the second surface of the limiting portion along the thickness direction of the first wall is arranged to be closer to the electrode assembly than the bottom surface of the first recess or flush with the bottom surface of the first recess, which facilitates the reduction of the thickness of the connecting portion and the increase of the thickness of the limiting portion, thereby facilitating reducing the connection difficulty between the connecting portion and the current collecting member while ensuring the structural strength of the limiting portion.

In some embodiments, the current collecting member includes: a base portion, where along the thickness direction of the first wall, the base portion is disposed between the electrode assembly and the first wall, and the base portion is connected to the electrode assembly; and a protruding portion, where along the thickness direction of the first wall, the protruding portion protrudes from the base portion in a direction away from the electrode assembly, and at least part of the protruding portion is accommodated within the first recess and connected to the bottom of the first recess.

In the above technical solution, the current collecting member is provided with a base portion and a protruding portion protrudingly provided on a side of the base portion facing away from the electrode assembly, and the protruding portion is inserted into the first recess and connected to the bottom of the first recess, so as to enable assembly connection between the current collecting member and the electrode terminal. The current collecting member adopting this structure facilitates the connection between the current collecting member and the electrode terminal, which is conducive to reducing the assembly difficulty between the current collecting member and the electrode terminal. In addition, the structure of the protruding portion inserted into the first recess can play a certain guiding and limiting role during the mutual assembly of the current collecting member and the electrode terminal, which is conducive to improving the assembly efficiency and assembly quality between the current collecting member and the electrode terminal.

In some embodiments, along the thickness direction of the first wall, a second recess is formed on a side of the current collecting member facing the electrode assembly, at a position corresponding to the protruding portion.

In the above technical solution, a second recess is provided on the side of the current collecting member facing the electrode assembly, at a position corresponding to the protruding portion. Specifically, the protruding portion protrudes from the side of the base portion facing away from the electrode assembly, and the second recess is formed on the side of the protruding portion facing the electrode assembly. The current collecting member adopting this structure facilitates the formation of the protruding portion on the current collecting member by processes such as stamping, which is conducive to reducing the manufacturing difficulty of the current collecting member. In addition, the manufacturing material of the current collecting member can be effectively reduced, which is conducive to reducing the manufacturing cost of the battery cell and reducing the weight of the battery cell.

In some embodiments, the electrode assembly includes a main body portion and a tab, where along the thickness direction of the first wall, the tab is disposed at an end of the main body portion facing the first wall, and the tab is connected to the current collecting member; and the battery cell further includes a mounting bracket, where the mounting bracket is disposed between the first wall and the main body portion, and the current collecting member is mounted on the mounting bracket.

In the above technical solution, the battery cell is further provided with a mounting bracket, and the mounting bracket is located between the first wall and the main body portion of the electrode assembly along the thickness direction of the first wall. The current collecting member mounted on the mounting bracket can play a role in fixing and supporting the current collecting member, which can reduce the occurrence of shaking or displacement of the current collecting member during use, thereby reducing the risk of connection failure between the current collecting member and the electrode terminal and the tab. In addition, when the tab of the electrode assembly is connected to the current collecting member and then assembled into the casing, the mounting bracket can stabilize the current collecting member, so as to facilitate the assembly connection between the current collecting member and the electrode terminal disposed on the first wall. This is conducive to reducing the assembly difficulty between the current collecting member and the electrode terminal to improve the production efficiency of the battery cell and improving the assembly quality between the current collecting member and the electrode terminal to ensure the production quality of the battery cell.

In some embodiments, the mounting bracket is provided with a mounting hole, where along the thickness direction of the first wall, the mounting hole extends through the mounting bracket. The current collecting member includes a base portion and a protruding portion, where along the thickness direction of the first wall, the base portion is disposed between the electrode assembly and the first wall and connected to the tab, and the protruding portion protrudes from the base portion in a direction away from the electrode assembly and passes through the mounting hole to connect to the electrode terminal, where at least part of the base portion is accommodated within the mounting hole.

In the above technical solution, a mounting hole for accommodating the base portion of the current collecting member is provided on the mounting bracket, and the mounting hole extends through both sides of the mounting bracket along the thickness direction of the first wall, enabling at least part of the base portion of the current collecting member to be accommodated within the mounting hole and the protruding portion of the current collecting member to pass through the mounting hole and connect to the electrode terminal, thereby reducing the connection difficulty between the current collecting member and the electrode terminal and the tab while enabling the base portion of the current collecting member and the mounting bracket to share part of the space along the thickness direction of the first wall. This is conducive to improving the internal space utilization rate of the battery cell, thereby effectively enhancing the energy density of the battery cell.

In some embodiments, a slot is provided on a wall surface of the mounting hole, and the base portion is inserted into the slot.

In the above technical solution, a slot for inserting the base portion of the current collecting member is provided on the wall surface of the mounting hole, so as to enable connection of the current collecting member to the wall surface of the mounting hole, thereby fixing the current collecting member to the mounting bracket. This structure facilitates accommodating the base portion of the current collecting member into the mounting hole and facilitates the assembly of the base portion, which is conducive to reducing the assembly difficulty between the current collecting member and the mounting bracket.

In some embodiments, the current collecting member and the electrode terminal are each provided in a quantity of two, the mounting bracket is provided with two mounting holes, and the current collecting member, the mounting hole, and the electrode terminal are arranged in a one-to-one correspondence; and the electrode assembly has two tabs with opposite polarities, and the two tabs are respectively connected to the two current collecting members.

In the above technical solution, both the current collecting member and the mounting hole provided on the mounting bracket are provided in a quantity of two, and each current collecting member is assembled into one mounting hole, enabling the mounting bracket to simultaneously stabilize two current collecting members with opposite polarities, so as to facilitate the assembly of the two current collecting members with the two electrode terminals.

In some embodiments, along the thickness direction of the first wall, the mounting bracket has an abutting surface facing the main body portion, and the abutting surface abuts against the main body portion.

In the above technical solution, the first surface of the mounting bracket facing the main body portion abuts against the main body portion of the electrode assembly, enabling the main body portion to provide support for the mounting bracket, thereby enhancing the structural stability of the mounting bracket assembled between the main body portion and the first wall. This further alleviates the occurrence of shaking or displacement of the current collecting member within the casing, thereby facilitating further improving the connection quality between the current collecting member and the electrode terminal.

In some embodiments, the abutting surface is provided with a relief groove, and the relief groove is configured to accommodate the tab.

In the above technical solution, a relief groove for accommodating the tab is provided on the first surface of the mounting bracket facing the main body portion to reduce the squeezing effect of the mounting bracket on the tab, thereby reducing the risk of the tab being damaged or inserted back into the main body portion.

In some embodiments, the battery cell further includes an insulating member, where along the thickness direction of the first wall, the insulating member is disposed between the first wall and the mounting bracket, so as to insulate and isolate the first wall and the current collecting member.

In the above technical solution, an insulating member is provided between the first wall and the mounting bracket, so that the insulating member can insulate and isolate the first wall and the current collecting member, thereby reducing the risk of a short circuit between the first wall and the current collecting member, so as to enhance the use safety of the battery cell.

In some embodiments, the casing includes: a housing and an end cover. The housing includes a sidewall and the first wall that are integrally formed, where the sidewall surrounds the first wall, and along the thickness direction of the first wall, one end of the sidewall is connected to the first wall, and the other end encloses an opening, the sidewall and the first wall together defining an accommodating cavity for accommodating the electrode assembly. The end cover closes the opening.

In the above technical solution, the first wall for mounting the electrode terminal is a wall of the housing disposed opposite to the end cover along the thickness direction of the first wall. This structure enables the first wall equipped with the electrode terminal to be far away from the end cover of the casing, so that there is no direct connection relationship between the first wall and the end cover, thereby further reducing the transmission of a force generated by pulling or twisting of the busbar component on the electrode terminal to the end cover, so as to reduce the risk of connection failure between the end cover and the housing, thereby facilitating further reducing the risk of leakage of the battery cell during use.

In some embodiments, the casing includes: a housing, where an accommodating cavity with an opening is formed inside the housing, and the electrode assembly is accommodated within the accommodating cavity; and an end cover closing the opening; where the end cover is the first wall.

In the above technical solution, the first wall for mounting the electrode terminal is the end cover for closing the opening of the housing. This structure facilitates assembling the electrode terminal on the first wall and is conducive to reducing the assembly difficulty between the current collecting member and the electrode terminal and the electrode assembly, thereby improving the production efficiency of the battery cell.

According to a second aspect, an embodiment of this application provides a battery including the battery cell according to any one of the above solutions.

According to a third aspect, an embodiment of this application provides an electric apparatus including the battery according to the above solution.

### BRIEF DESCRIPTION OF DRAWINGS

To illustrate the technical solutions of the embodiments of this application more clearly, the drawings required for use in the embodiments will be briefly introduced below. It should be understood that the following drawings only show some embodiments of this application and therefore should not be regarded as limiting the scope. For those of ordinary skill in the art, other related drawings can also be obtained based on these drawings without creative effort.
FIG. 1 is a schematic structural diagram of a vehicle according to some embodiments of this application;
FIG. 2 is an exploded view of the structure of a battery according to some embodiments of this application;
FIG. 3 is a schematic structural diagram of a battery cell according to some embodiments of this application;
FIG. 4 is an exploded view of a structure of a battery cell according to some embodiments of this application;
FIG. 5 is a cross-sectional view of a battery cell according to some embodiments of this application;
FIG. 6 is a partial enlarged view at position A of the battery cell shown in FIG. 5;
FIG. 7 is a schematic diagram of the connection between an electrode terminal and a current collecting member and between the electrode terminal and a busbar component according to some embodiments of this application;
FIG. 8 is a cross-sectional view of an electrode terminal of a battery cell according to some embodiments of this application;
FIG. 9 is a schematic structural diagram of a current collecting member of a battery cell according to some embodiments of this application;
FIG. 10 is a cross-sectional view of a current collecting member of a battery cell according to some embodiments of this application;
FIG. 11 is a schematic diagram of the connection between a current collecting member and a mounting bracket of a battery cell according to some embodiments of this application;
FIG. 12 is a schematic structural diagram of a mounting bracket of a battery cell according to some embodiments of this application;
FIG. 13 is a front view of a mounting bracket of a battery cell according to some embodiments of this application.

Description of reference signs: 1000. vehicle; 100. battery; 10. enclosure; 11. first enclosure body; 12. second enclosure body; 20. battery cell; 21. casing; 211. housing; 2111. first wall; 2111a. lead-out hole; 2112. sidewall; 2113. accommodating cavity; 2114. opening; 212. end cover; 22. electrode assembly; 221. main body portion; 222. tab; 23. electrode terminal; 231. first recess; 2311. first groove; 2312. second groove; 232. connecting portion; 2321. first weld mark; 233. first surface; 2331. second weld mark; 234. body portion; 235. limiting portion; 2351. second surface; 236. riveting portion; 24. current collecting member; 241. base portion; 242. protruding portion; 243. second recess; 25. separator; 26. insulating member; 27. sealing member; 28. mounting bracket; 281. mounting hole; 282. slot; 283. abutting surface; 284. relief groove; 30. busbar component; 200. controller; 300. motor; and X. thickness direction of the first wall.

### DESCRIPTION OF EMBODIMENTS

To make the objectives, technical solutions, and advantages of the embodiments of this application clearer, the technical solutions in the embodiments of this application will be clearly described below in conjunction with the drawings in the embodiments of this application. Obviously, the described embodiments are some embodiments of this application, not all embodiments. Based on the embodiments in this application, all other embodiments obtained by those of ordinary skill in the art without creative efforts fall within the protection scope of this application.

Unless otherwise defined, all technical and scientific terms used in this application have the same meaning as commonly understood by those skilled in the technical field of this application; the terms used in the specification of this application are for the purpose of describing specific embodiments only and are not intended to limit this application; the terms "including" and "having" and any variations thereof in the specification, claims, and the above description of the drawings of this application are intended to cover non-exclusive inclusion. In the specification, claims, or accompanying drawings of this application, the terms "first", "second", and the like are intended to distinguish between different objects rather than to describe a particular order or a primary-secondary relationship.

Reference to "embodiment" in this application means that a particular feature, structure, or characteristic described in connection with the embodiment may be included in at least one embodiment of this application. The appearance of this phrase in various places in the specification does not necessarily refer to the same embodiment, nor is it an independent or alternative embodiment mutually exclusive with other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection; and a direct connection, an indirect connection via an intermediate medium, or an internal communication between two elements. For those of ordinary skill in the art, the specific meanings of the above terms in this application can be understood according to specific circumstances.

The term "and/or" in this application is merely an association relationship describing associated objects, indicating that three relationships may exist. For example, A and/or B may indicate: A exists alone, A and B exist simultaneously, and B exists alone. In addition, the character "/" in this application generally indicates an "or" relationship between the contextually associated objects.

In the embodiments of this application, the same reference signs denote the same components. For brevity, in different embodiments, detailed descriptions of the same components are not repeated. It should be understood that the thickness, length, width, and other dimensions of various components in the embodiments of this application shown in the drawings, as well as the overall thickness, length, width, and other dimensions of the integrated device, are merely exemplary and should not constitute any limitation to this application.

The term "plurality" appearing in this application refers to two or more (including two).

In the embodiments of this application, the battery cell may be a secondary battery, and the secondary battery refers to a battery cell that can be recharged to activate active materials for continuous use after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, or a lead storage battery. This is not limited in the embodiments of this application.

The battery cell typically includes an electrode assembly. The electrode assembly includes a positive electrode, a negative electrode, and a separator. During charging and discharging of the battery cell, active ions (such as lithium ions) intercalate and deintercalate back and forth between the positive electrode and the negative electrode. The separator is arranged between the positive electrode and the negative electrode to prevent a short circuit of the positive electrode and negative electrode and to allow the active ions to pass through.

In some embodiments, the positive electrode may be a positive electrode plate, and the positive electrode plate may include a positive electrode current collector and a positive electrode active material arranged on at least one surface of the positive electrode current collector.

In an example, the positive electrode current collector includes two opposed surfaces in a thickness direction of the positive electrode current collector, and the positive electrode active material is arranged on either or both of the two opposed surfaces of the positive electrode current collector.

In an example, the positive electrode current collector may be a metal foil current collector or a composite current collector. For example, as the metal foil, the positive electrode current collector may use silver surface-treated aluminum or stainless steel, stainless steel, copper, aluminum, nickel, baked carbon, carbon, nickel, or titanium. The composite current collector may include a polymer material matrix and a metal layer. The composite current collector may be formed by forming a metal material (aluminum, aluminum alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene).

In an example, the positive electrode active material may include at least one of the following materials: lithium-containing phosphate, lithium transition metal oxide, and respective modified compounds thereof. However, this application is not limited to such materials, and may alternatively use other conventional well-known materials that can be used as positive electrode active materials for batteries. These positive electrode active materials may be used alone or in combination of two or more. Examples of lithium-containing phosphates may include, but are not limited to, at least one of lithium iron phosphate (such as LiFePO4 (also abbreviated as LFP)), a composite material of lithium iron phosphate and carbon, lithium manganese phosphate (such as LiMnPO4), a composite material of lithium manganese phosphate and carbon, lithium iron manganese phosphate, and a composite material of lithium iron manganese phosphate and carbon.

In some embodiments, the negative electrode may be a negative electrode plate, and the negative electrode plate may include a negative electrode current collector.

In an example, the negative electrode current collector may use a metal foil, a foam metal, or a composite current collector. For example, as the metal foil, the negative electrode current collector may use silver surface-treated aluminum or stainless steel, stainless steel, copper, aluminum, nickel, baked carbon, carbon, nickel, or titanium. The foam metal may be foam nickel, foam copper, foam aluminum, foam alloy, or foam carbon. The composite current collector may include a polymer material matrix and a metal layer. The composite current collector may be formed by forming a metal material (copper, copper alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene).

In an example, the negative electrode plate may include a negative electrode current collector and a negative electrode active material disposed on at least one surface of the negative electrode current collector.

In an example, the negative electrode current collector has two opposite surfaces in its own thickness direction, and the negative electrode active material is disposed on either or both of the two opposite surfaces of the negative electrode current collector.

In an example, the negative electrode active material may use well-known negative electrode active materials for battery cells in the art. In an example, the negative electrode active material may include at least one of the following materials: artificial graphite, natural graphite, soft carbon, hard carbon, silicon-based materials, tin-based materials, and lithium titanate.

In some embodiments, the positive electrode current collector may be made of aluminum, and the negative electrode current collector may be made of copper.

In some embodiments, the electrode assembly further includes a separator, and the separator is disposed between the positive electrode and the negative electrode.

In some embodiments, the separator is an isolating film. The isolating film is not limited to any particular type in this application, and may be any well-known porous isolating film with good chemical stability and mechanical stability.

In an example, major materials of the isolating film may be selected from at least one of glass fiber, non-woven fabric, polyethylene, polypropylene, polyvinylidene fluoride, or ceramics.

In some embodiments, the separator is a solid electrolyte. The solid electrolyte is arranged between the positive electrode and the negative electrode and plays the roles of transporting ions and isolating the positive electrode and the negative electrode.

In some embodiments, the battery cell further includes an electrolyte, and the electrolyte plays a role in conducting ions between the positive and negative electrodes. The type of electrolyte is not specifically limited in this application and can be selected according to requirements. The electrolyte may be liquid, gel, or solid.

In some embodiments, the electrode assembly is a wound structure. The positive electrode plate and the negative electrode plate are wound into a wound structure.

In some embodiments, the electrode assembly is a laminated structure.

In some embodiments, the shape of the electrode assembly may be cylindrical, flat, or prismatic.

In some embodiments, the electrode assembly is provided with tabs, and the tabs can conduct current from the electrode assembly. The tabs include a positive tab and a negative tab.

In some embodiments, the battery cell may include a casing. The casing is configured to encapsulate the electrode assembly, the electrolyte, and other components. The casing may be a steel casing, an aluminum casing, a plastic casing (for example, polypropylene), a composite metal casing (for example, a copper-aluminum composite casing), an aluminum-plastic film, or the like.

In an example, the battery cell may be a cylindrical battery cell, a prismatic battery cell, a pouch battery cell, or a battery cell of other shapes. The prismatic battery cell includes a square-housing battery cell, a blade-shaped battery cell, a polygonal prismatic battery, such as a hexagonal prismatic battery, and this application is not particularly limited.

The battery mentioned in the embodiments of this application refers to a single physical module including one or more battery cells to provide higher voltage and capacity.

In some embodiments, the battery can be a battery module, and when there are a plurality of battery cells, the plurality of battery cells are arranged and fastened to form a battery module.

In some embodiments, the battery may be a battery pack, the battery pack includes an enclosure and battery cells, and the battery cells or battery modules are accommodated in the enclosure.

In some embodiments, the enclosure may be used as part of the chassis structure of a vehicle. For example, part of the enclosure may become at least part of the chassis of a vehicle, or part of the enclosure may become at least parts of a cross beam and longitudinal beam of a vehicle.

In some embodiments, the battery may be an energy storage apparatus. The energy storage apparatus includes an energy storage container, an energy storage electric cabinet, and the like.

The battery has outstanding advantages such as high energy density, low environmental pollution, high power density, long service life, wide adaptability range, and low self-discharge coefficient, and has become a crucial part of new energy development today. However, with the continuous development of battery technology, higher requirements have also been put forward for the safety performance and service life of batteries.

For a general battery cell, the casing of the battery cell typically includes a housing and an end cover, and the end cover closes the opening of the housing. To facilitate the assembly of the battery cell, the electrode terminal is usually riveted and assembled to the end cover of the battery cell, such that when the end cover is closed with the housing, the electrode terminal can be first welded to the tab of the electrode assembly through a current collecting member disposed within the housing, so as to form electrical connection between the electrode terminal and the electrode assembly, thereby using the electrode terminal as the output pole of the battery cell to enable the input or output of electric energy of the battery cell. Finally, the end cover is connected to the housing.

The inventors have found that a busbar component is usually provided within the battery, and that connecting the busbar component to the electrode terminal of the battery cell can achieve series, parallel, or mixed connections between a plurality of battery cells. However, since the electrode terminal needs to be assembled to the end cover and two ends of the electrode terminal need to extend out of both sides of the end cover, the electrode terminal is relatively thick, greatly increasing the welding difficulty between the electrode terminal and the current collecting member and the busbar component, which is not conducive to improving the production efficiency of the battery.

To address the problem of high welding difficulty between the electrode terminal and the current collecting member and the busbar component, in the prior art, the electrode terminal is usually set as a split structure, including a terminal body and a cover plate. A recess is provided at the end of the terminal body facing away from the current collecting member to reduce the thickness of the electrode terminal, and the end of the terminal body provided with the recess is riveted to the end cover, so that the welding difficulty between the electrode terminal and the current collecting member is reduced, and the connection relationship between the electrode terminal and the current collecting member is achieved through the welding connection between the terminal body and the current collecting member. Then, a cover plate is welded to the side of the terminal body facing away from the current collecting member, so that the cover plate closes the recess, thereby welding the cover plate to the busbar component within the battery to form welded connection between the electrode terminal and the busbar component and reduce the welding difficulty between the electrode terminal and the busbar component. However, during the later use of the battery cell with this structure, due to operating conditions such as shaking or movement of the battery cell, the busbar component connected to the cover plate will exert a certain pulling or twisting force on the cover plate, which can easily lead to connection failure such as weld seam cracking between the cover plate and the terminal body due to long-term fatigue stress, resulting in poor use stability of the battery cell and making the battery cell at risk of use failure, which is not conducive to improving the service life of the battery cell.

Based on the above considerations, to address the issues of low production efficiency and short service life of the battery cell, the inventors, after in-depth research, have designed a battery cell, which includes a casing, an electrode assembly, an electrode terminal, and a current collecting member. The casing has a first wall, and the electrode assembly is accommodated within the casing. The electrode terminal is disposed on the first wall, and along the thickness direction of the first wall, an end of the electrode terminal facing the electrode assembly is provided with a first recess, and an end of the electrode terminal facing away from the electrode assembly is configured to connect to a busbar component. The current collecting member is connected to the electrode assembly, and at least part of the current collecting member is accommodated within the first recess and connected to the bottom of the first recess, so as to form electrical connection between the electrode assembly and the electrode terminal.

In the battery cell with this structure, with the first recess provided at the end of the electrode terminal facing the electrode assembly along the thickness direction of the first wall, the bottom of the first recess of the electrode terminal is configured to connect to the current collecting member, and the end of the electrode terminal facing away from the electrode assembly along the thickness direction of the first wall is configured to connect to the busbar component, such that after at least part of the current collecting member is accommodated within the first recess and connected to the bottom of the first recess, electrical connection between the electrode assembly and the busbar component can be achieved. Specifically, the part of the current collecting member accommodated within the first recess is connected to the bottom wall of the first recess. The battery cell adopting this structure can reduce the thickness of the region of the electrode terminal used for connecting to the current collecting member, which is conducive to reducing the assembly difficulty between the electrode terminal and the current collecting member, thereby improving the production efficiency of the battery cell. In addition, since the first recess is provided at the end of the electrode terminal facing the electrode assembly, and part of the current collecting member is inserted into the first recess and connected to the electrode terminal, there is no need to provide a recess at the end of the electrode terminal configured to connect to the busbar component, nor is it necessary to connect a cover plate to the electrode terminal for blocking the recess, so that the busbar component can be directly connected to the electrode terminal. This is conducive to improving the connection strength and connection stability between the electrode terminal and the busbar component, so as to reduce the risk of connection failure between the electrode terminal and the busbar component during use, thereby ensuring the use stability of the battery cell and facilitating improving the service life of the battery cell.

The battery cell disclosed in the embodiments of this application can be used, but is not limited to, in electric apparatuses such as vehicles, ships, or aircraft. A power supply system of the electric apparatus can be composed of the battery cell, battery, and the like disclosed in this application, which is conducive to addressing the issue of easy connection failure between the electrode terminal and the busbar component of the battery cell, so as to improve the service life of the battery cell.

An embodiment of this application provides an electric apparatus using a battery as a power source, and the electric apparatus may be but is not limited to a mobile phone, a tablet, a laptop, an electric toy, an electric tool, an electric bicycle, an electric vehicle, a ship, a spacecraft, and the like. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For the convenience of description, the following embodiments take an electric apparatus as a vehicle 1000 according to an embodiment of this application as an example for description.

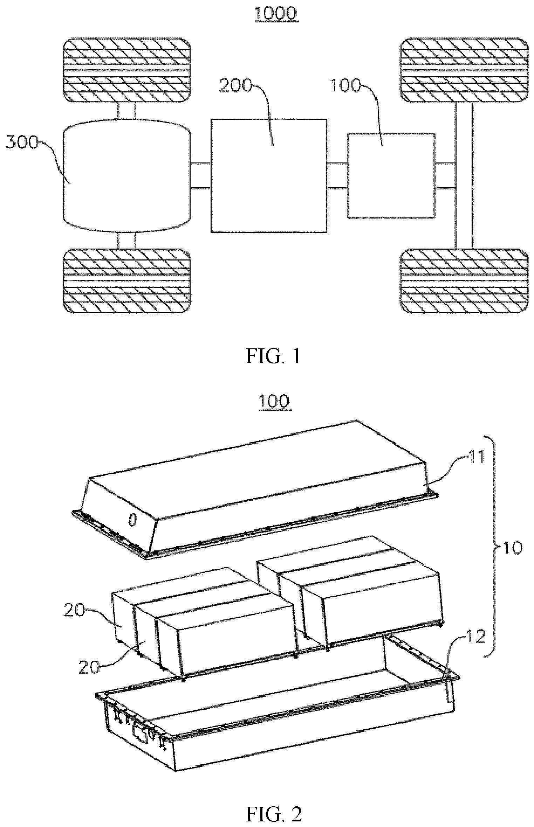

Refer to FIG. 1. FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. A battery 100 is provided inside the vehicle 1000, and the battery 100 may be disposed at the bottom, head, or tail of the vehicle 1000. The battery 100 may be configured to supply power to the vehicle 1000. For example, the battery 100 may be used as an operational power supply for the vehicle 1000. The vehicle 1000 may further include a controller 200 and a motor 300, and the controller 200 is configured to control the battery 100 to supply power to the motor 300, for example, for the operational power requirements during startup, navigation, and driving of the vehicle 1000.

In some embodiments of this application, the battery 100 can be used not only as the operational power source for the vehicle 1000 but also as a driving power source for the vehicle 1000, replacing or partially replacing fossil fuel or natural gas to provide driving traction for the vehicle 1000.

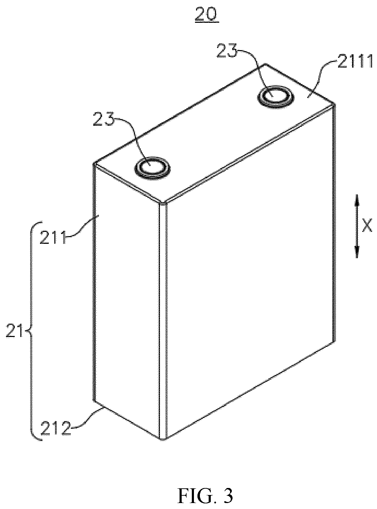

Referring to FIG. 2 and FIG. 3, FIG. 2 is an exploded view of the structure of a battery 100 according to some embodiments of this application, and FIG. 3 is a schematic structural diagram of a battery cell 20 according to some embodiments of this application. The battery 100 includes an enclosure 10 and a battery cell 20, and the battery cell 20 is configured to be accommodated within the enclosure 10.

The enclosure 10 is configured to provide an assembly space for the battery cell 20, and the enclosure 10 may adopt various structures. In some embodiments, the enclosure 10 may include a first enclosure body 11 and a second enclosure body 12, the first enclosure body 11 and the second enclosure body 12 are mutually closed, and the first enclosure body 11 and the second enclosure body 12 together define an assembly space for accommodating the battery cell 20. The second enclosure body 12 may be a hollow structure with one end open, the first enclosure body 11 may be a plate-like structure, and the first enclosure body 11 closes the open side of the second enclosure body 12, so that the first enclosure body 11 and the second enclosure body 12 together define the assembly space; the first enclosure body 11 and the second enclosure body 12 may also both be hollow structures with one side open, and the open side of the first enclosure body 11 closes the open side of the second enclosure body 12. Of course, the enclosure 10 formed by the first enclosure body 11 and the second enclosure body 12 may be of various shapes, such as a cylinder, a cuboid, and the like.

In the battery 100, there may be a plurality of battery cells 20, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the enclosure 10. Certainly, the battery 100 may alternatively be formed in a manner that a plurality of battery cells 20 are connected in series, parallel, or series-parallel first to form a battery module, and then a plurality of battery modules are connected in series, parallel, or series-parallel to form an entirety which is accommodated in the enclosure 10. The battery 100 may further include other structures, for example, the battery 100 may further include a busbar component 30 (not shown in the figure), and the busbar component 30 is configured to connect to the plurality of battery cells 20, so as to form electrical connection between the plurality of battery cells 20.

Each battery cell 20 may be a secondary battery or a primary battery, it may alternatively be a lithium-sulfur battery, a sodium-ion battery, or a magnesium-ion battery, but is not limited thereto. The battery cell 20 may be cylindrical, flat, cuboid, or of other shapes. As an example, in FIG. 3, the battery cell 20 is a cuboid structure.

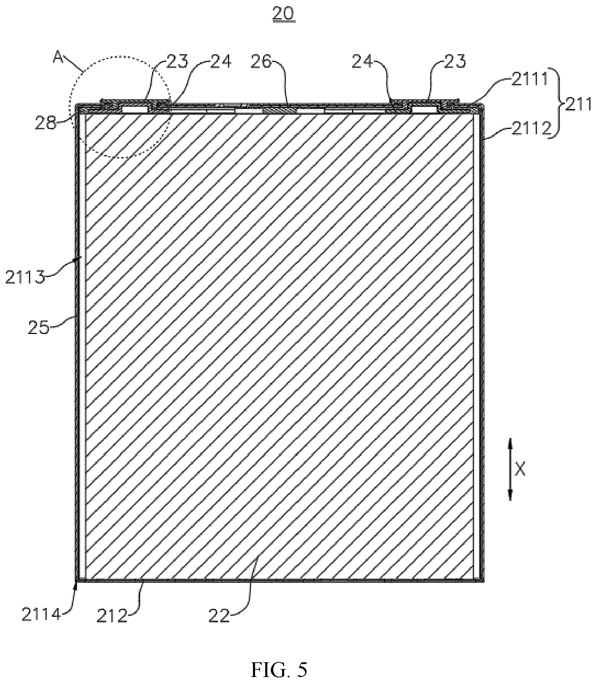

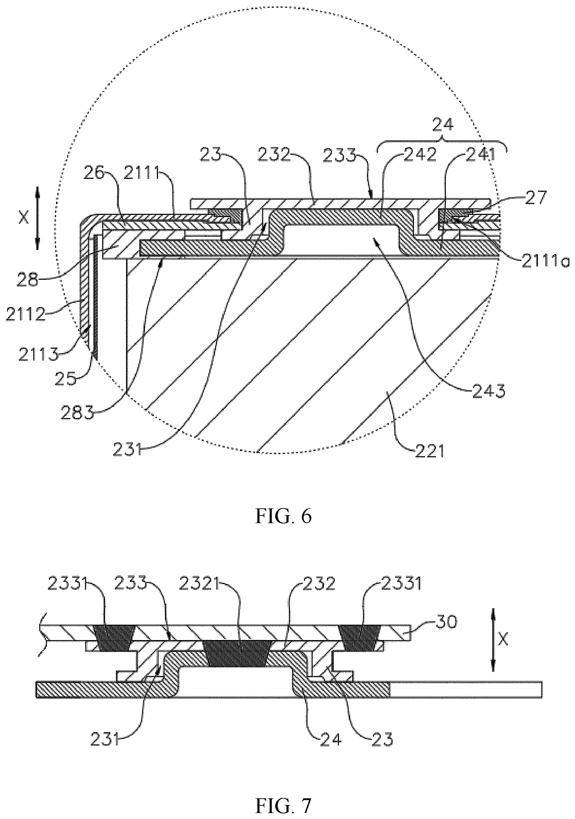

According to some embodiments of this application, referring to FIG. 3, and further referring to FIG. 4, FIG. 5, FIG. 6, and FIG. 7, FIG. 4 is an exploded view of the structure of a battery cell 20 according to some embodiments of this application, FIG. 5 is a cross-sectional view of a battery cell 20 according to some embodiments of this application, FIG. 6 is a partial enlarged view at position A of the battery cell 20 shown in FIG. 5, and FIG. 7 is a schematic diagram of the connection between an electrode terminal 23 and a current collecting member 24 and between an electrode terminal 23 and a busbar component 30 according to some embodiments of this application. This application provides a battery cell 20, and the battery cell 20 includes a casing 21, an electrode assembly 22, an electrode terminal 23, and a current collecting member 24. The casing 21 has a first wall 2111, and the electrode assembly 22 is accommodated within the casing 21. The electrode terminal 23 is disposed on the first wall 2111, and along a thickness direction X of the first wall, an end of the electrode terminal 23 facing the electrode assembly 22 is provided with a first recess 231, and an end of the electrode terminal 23 facing away from the electrode assembly 22 is configured to connect to a busbar component 30. The current collecting member 24 is connected to the electrode assembly 22, and at least part of the current collecting member 24 is accommodated within the first recess 231 and connected to a bottom of the first recess 231, so as to form electrical connection between the electrode assembly 22 and the electrode terminal 23.

The casing 21 may also be configured to accommodate an electrolyte, such as an electrolyte solution. The casing 21 may have various structural forms. The casing 21 may also be made of various materials such as copper, iron, aluminum, steel, and aluminum alloy.

In some embodiments, the casing 21 may include a housing 211 and an end cover 212, an accommodating cavity 2113 is formed inside the housing 211, and the accommodating cavity 2113 has an opening 2114. Specifically, the housing 211 is a hollow structure with one end open, and the end cover 212 closes the opening 2114 of the housing 211 and forms a sealed connection, so as to form a sealed space for accommodating the electrode assembly 22 and the electrolyte.

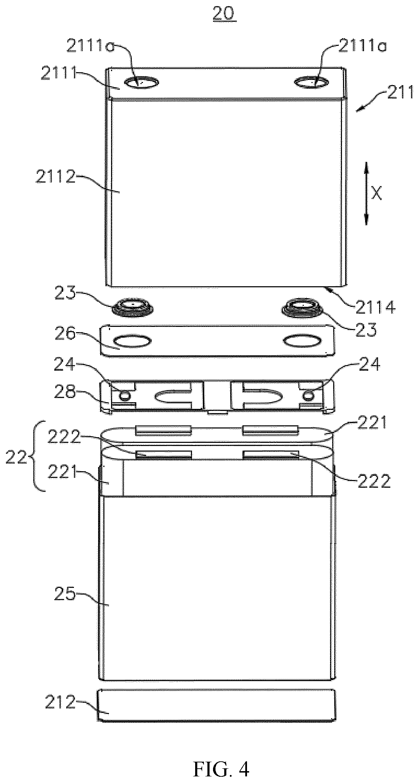

Optionally, the first wall 2111 for mounting the electrode terminal 23 may be the end cover 212 or one of the plurality of walls of the housing 211. As an example, in FIG. 4 and FIG. 5, the first wall 2111 is a bottom wall of the housing 211 disposed opposite to the end cover 212 along the thickness direction X of the first wall, and of course, in other embodiments, the first wall 2111 may also be a sidewall 2112 of the housing 211 adjacent to and abutting against the end cover 212.

When assembling the battery cell 20, the electrode assembly 22 may be first placed into the housing 211, and an electrolyte is filled into the housing 211, and then the end cover 212 is closed onto the opening 2114 of the housing 211, so as to close the opening 2114 of the housing 211.

The housing 211 may be of various shapes, such as a cylinder, a cuboid, and the like. A shape of the housing 211 may be determined according to a specific shape of the electrode assembly 22. For example, if the electrode assembly 22 is a cylindrical structure, the housing 211 may adopt a cylindrical structure; if the electrode assembly 22 is a cuboid structure, the housing 211 may adopt a cuboid structure. Of course, the end cover 212 may also be of various structures, for example, the end cover 212 is a plate-like structure or a hollow structure with one end open, and the like. As an example, in FIG. 4, the housing 211 is a cuboid structure.

It can be understood that the casing 21 is not limited to the above structure, and the casing 21 may also be of other structures, for example, the casing 21 includes a housing 211 and two end covers 212, the housing 211 is a hollow structure with openings 2114 on opposite sides, and one end cover 212 correspondingly closes one opening 2114 of the housing 211 and forms a sealed connection, so as to form a sealed space for accommodating the electrode assembly 22 and the electrolyte.

Optionally, one or a plurality of electrode assemblies 22 may be accommodated within the casing 21. As an example, in FIG. 4, there are two electrode assemblies 22, and the two electrode assemblies 22 are stacked along their thickness direction. Specifically, the two electrode assemblies 22 are stacked along the thickness direction of the battery cell 20. Of course, in other embodiments, the electrode assemblies 22 accommodated within the casing 21 may alternatively be three, four, five, or six, and the like, stacked.

In some embodiments, as shown in FIG. 4, the battery cell 20 may further include a separator 25, and the separator 25 covers the outside of the electrode assembly 22, so as to insulate and isolate the electrode assembly 22 and the casing 21.

As an example, the separator 25 is an insulating film covering the outside of the electrode assembly 22, and the separator 25 may be made of a material such as plastic, rubber, or silicone.

The electrode terminal 23 plays a role in outputting or inputting the electric energy of the battery cell 20. As an example, the electrode terminal 23 is an integrally formed structure. Specifically, the electrode terminal 23 is formed by an integral manufacturing process, making the electrode terminal 23 an integral structure, such as by stamping, casting, or extrusion molding processes. The electrode terminal 23 may be made of various materials such as copper, iron, aluminum, steel, or aluminum alloy.

Along the thickness direction X of the first wall, an end of the electrode terminal 23 facing the electrode assembly 22 is provided with a first recess 231, and an end of the electrode terminal 23 facing away from the electrode assembly 22 is configured to connect to a busbar component 30. Specifically, along the thickness direction X of the first wall, an end of the electrode terminal 23 close to the inside of the battery cell 20 is formed with the first recess 231, while an end of the electrode terminal 23 away from the inside of the battery cell 20 is configured to connect to the busbar component 30 within the battery 100, so as to enable the input or output of the electric energy of the battery cell 20.

As an example, the busbar component 30 may be made of various materials such as copper, iron, aluminum, steel, or aluminum alloy.

In some embodiments, as shown in FIG. 4 and FIG. 6, the first wall 2111 is provided with a lead-out hole 2111a, the lead-out hole 2111a extends through both sides of the first wall 2111 along the thickness direction X of the first wall, and the electrode terminal 23 passes through the lead-out hole 2111a, so as to mount the electrode terminal 23 on the first wall 2111. One end of the electrode terminal 23 forms the first recess 231 for inserting the current collecting member 24, and the other end is configured to connect to the busbar component 30 of the battery 100, so as to enable the input or output of the electric energy of the battery cell 20.

The electrode terminal 23 is insulatedly mounted on the first wall 2111. Specifically, no electrical connection is formed between the electrode terminal 23 and the first wall 2111.

The current collecting member 24 plays a role in connecting the electrode terminal 23 and the electrode assembly 22, so as to form electrical connection between the electrode assembly 22 and the electrode terminal 23. The current collecting member 24 may be made of various materials such as copper, iron, aluminum, steel, or aluminum alloy.

At least part of the current collecting member 24 is accommodated within the first recess 231 and connected to the bottom of the first recess 231. Specifically, the current collecting member 24 may be entirely accommodated within the first recess 231 or partially accommodated within the first recess 231. In FIG. 6, part of the current collecting member 24 is accommodated within the first recess 231 and connected to the bottom of the first recess 231. Specifically, the bottom of the first recess 231 forms a connecting portion 232 configured to connect to the current collecting member 24. The current collecting member 24 has a portion inserted into the first recess 231, and the part of the current collecting member 24 inserted into the first recess 231 is connected to a bottom wall of the first recess 231, so as to enable connection of the current collecting member 24 to the electrode terminal 23.

As an example, the part of the current collecting member 24 accommodated within the first recess 231 is welded to the connecting portion 232 of the electrode terminal 23. Specifically, the part of the current collecting member 24 accommodated within the first recess 231 is welded to the bottom of the first recess 231.

Optionally, in FIG. 4 and FIG. 5, the electrode terminal 23 and the current collecting member 24 are each provided in a quantity of two, the two electrode terminals 23 are mounted on the first wall 2111, and each electrode terminal 23 is connected to the electrode assembly 22 through one current collecting member 24, so as to output the positive and negative electrodes of the battery cell 20. Of course, in other embodiments, the two electrode terminals 23 may alternatively be mounted on different walls of the casing 21.

In some embodiments, the battery cell 20 may further include a pressure relief mechanism, and the pressure relief mechanism is mounted on the casing 21. Optionally, the pressure relief mechanism may be disposed on the end cover 212 or on the housing 211. The pressure relief mechanism is configured to release the internal pressure of the battery cell 20 when the internal pressure or temperature of the battery cell 20 reaches a predetermined value.

As an example, the pressure relief mechanism may be a component such as an explosion-proof valve, an explosion-proof disc, a gas valve, a pressure relief valve, or a safety valve.

With the first recess 231 provided at the end of the electrode terminal 23 facing the electrode assembly 22 along the thickness direction X of the first wall, the bottom of the first recess 231 of the electrode terminal 23 is configured to connect to the current collecting member 24, and the end of the electrode terminal 23 facing away from the electrode assembly 22 along the thickness direction X of the first wall is configured to connect to the busbar component 30, such that after at least part of the current collecting member 24 is accommodated within the first recess 231 and connected to the bottom of the first recess 231, electrical connection between the electrode assembly 22 and the busbar component 30 can be achieved. Specifically, the part of the current collecting member 24 accommodated within the first recess 231 is connected to a bottom wall of the first recess 231. The battery cell 20 adopting this structure can reduce the thickness of the region of the electrode terminal 23 used for connecting to the current collecting member 24, which is conducive to reducing the assembly difficulty between the electrode terminal 23 and the current collecting member 24, thereby improving the production efficiency of the battery cell 20. In addition, since the first recess 231 is provided at the end of the electrode terminal 23 facing the electrode assembly 22, and part of the current collecting member 24 is inserted into the first recess 231 and connected to the electrode terminal 23, there is no need to provide a recess at the end of the electrode terminal 23 configured to connect to the busbar component 30, nor is it necessary to connect a cover plate to the electrode terminal 23 for blocking the recess, so that the busbar component 30 can be directly connected to the electrode terminal 23. This is conducive to improving the connection strength and connection stability between the electrode terminal 23 and the busbar component 30, so as to reduce the risk of connection failure between the electrode terminal 23 and the busbar component 30 during use, thereby ensuring the use stability of the battery cell 20 and facilitating improving the service life of the battery cell 20.

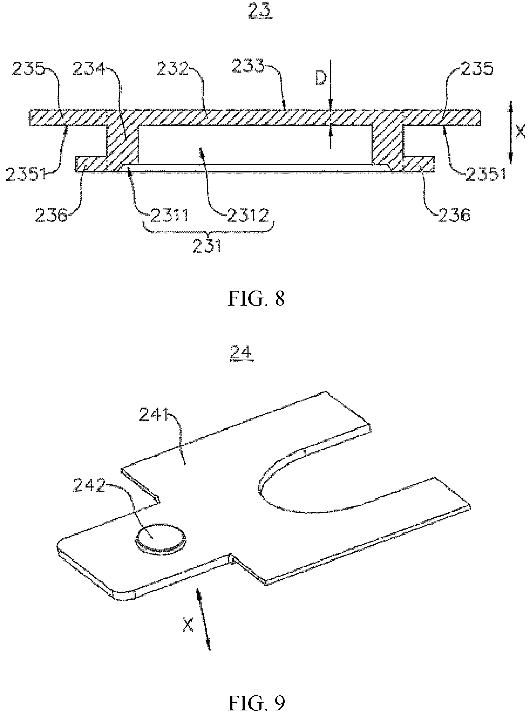

According to some embodiments of this application, referring to FIG. 5, FIG. 6, and FIG. 7 and further to FIG. 8, FIG. 8 is a cross-sectional view of an electrode terminal 23 of a battery cell 20 according to some embodiments of this application. Along the thickness direction X of the first wall, the electrode terminal 23 has a first surface 233 farthest from the electrode assembly 22, the first surface 233 is configured to connect to the busbar component 30, a connecting portion 232 is formed between the first surface 233 and a bottom surface of the first recess 231, and the connecting portion 232 is connected to the current collecting member 24.

Along the thickness direction X of the first wall, the electrode terminal 23 has a first surface 233 farthest from the electrode assembly 22. Specifically, the first surface 233 is an end surface of the electrode terminal 23 facing away from and farthest from the electrode assembly 22 along the thickness direction X of the first wall.

As an example, the busbar component 30 is configured to be welded to the first surface 233.

A connecting portion 232 is formed between the first surface 233 and the bottom surface of the first recess 231. Specifically, the connecting portion 232 is a region of the electrode terminal 23 between the first surface 233 and the bottom surface of the first recess 231, and this region is connected to part of the current collecting member 24 inserted into the first recess 231. Since the first surface 233 is configured to connect to the busbar component 30, both the current collecting member 24 and the busbar component 30 can be connected to the connecting portion 232, and a side of the connecting portion 232 facing away from the electrode assembly 22 along the thickness direction X of the first wall is the first surface 233.

A connecting portion 232 connected to the current collecting member 24 is formed between the first surface 233 of the electrode terminal 23 configured to connect to the busbar component 30 and the bottom surface of the first recess 231, such that the part of the electrode terminal 23 located between the first surface 233 and the bottom surface of the first recess 231 is connected to the current collecting member 24, and a side of the connecting portion 232 facing away from the current collecting member 24 is a part of the first surface 233. The battery cell 20 adopting this structure facilitates the connection between the electrode terminal 23 and the busbar component 30, which is conducive to reducing the assembly difficulty between the electrode terminal 23 and the busbar component 30. In addition, the area of the region where the electrode terminal 23 and the busbar component 30 are connected to each other can be effectively increased, and the structural strength and connection stability of the electrode terminal 23 in connecting the current collecting member 24 and the busbar component 30 can be effectively enhanced, so as to further reduce the risk of connection failure between the electrode terminal 23 and the busbar component 30 during use.

According to some embodiments of this application, as shown in FIG. 6, FIG. 7, and FIG. 8, the first surface 233 is a flat surface.

The first surface 233 is a flat surface. Specifically, an end surface of the electrode terminal 23 on a side facing away from the electrode assembly 22 along the thickness direction X of the first wall is a flat surface. A surface of the connecting portion 232 on a side facing away from the electrode assembly 22 along the thickness direction X of the first wall is flush with an end surface of the electrode terminal 23 on a side facing away from the electrode assembly 22 along the thickness direction X of the first wall, thereby together defining the first surface 233. Of course, in other embodiments, the first surface 233 may alternatively be a curved surface or the like.

The first surface 233 of the electrode terminal 23 configured to connect to the busbar component 30 is provided as a flat surface, which facilitates the connection between the electrode terminal 23 and the busbar component 30 and is conducive to improving the assembly quality between the electrode terminal 23 and the busbar component 30.

According to some embodiments of this application, as shown in FIG. 6 and FIG. 7, the connecting portion 232 is welded to the current collecting member 24 and forms a first weld mark 2321, and along the thickness direction X of the first wall, the first weld mark 2321 extends to the first surface 233.

The first weld mark 2321 extends to the first surface 233. A side of the connecting portion 232 of the electrode terminal 23 used for welding to the current collecting member 24 facing away from the current collecting member 24 along the thickness direction X of the first wall is the first surface 233, such that the first weld mark 2321 is formed on the first surface 233 when the connecting portion 232 is welded to the current collecting member 24.

As an example, the connecting portion 232 and the current collecting member 24 are connected by laser welding.

The first weld mark 2321 formed by welding the connecting portion 232 to the current collecting member 24 extends to the first surface 233 along the thickness direction X of the first wall, such that a side of the connecting portion 232 of the electrode terminal 23 used for welding to the current collecting member 24 facing away from the current collecting member 24 along the thickness direction X of the first wall is flush with the first surface 233, thereby effectively increasing the area of the first surface 233, so as to increase the connection area and contact area between the electrode terminal 23 and the busbar component 30, thus facilitating the connection between the electrode terminal 23 and the busbar component 30, which is conducive to reducing assembly difficulty and improving the connection quality between the electrode terminal 23 and the busbar component 30.

According to some embodiments of this application, as shown in FIG. 7, the first surface 233 is configured to be welded to the busbar component 30 and forms a second weld mark 2331 on the first surface 233, and along the thickness direction X of the first wall, a projection of the second weld mark 2331 on the first surface 233 does not overlap with a projection of the first weld mark 2321 on the first surface 233.

A projection of the second weld mark 2331 on the first surface 233 does not overlap with a projection of the first weld mark 2321 on the first surface 233. Specifically, there is no overlapping region between the first weld mark 2321 and the second weld mark 2331.

As an example, the first surface 233 and the busbar component 30 are connected by laser welding.

Since both the first weld mark 2321 and the second weld mark 2331 are formed on the first surface 233 of the electrode terminal 23, arranging the projection of the first weld mark 2321 and the projection of the second weld mark 2331 to be non-overlapping along the thickness direction X of the first wall, without overlapping region between the first weld mark 2321 and the second weld mark 2331, can effectively reduce the mutual influence between the first weld mark 2321 and the second weld mark 2331, so as to reduce the risk of the second weld mark 2331 formed by welding the electrode terminal 23 to the busbar component 30 causing melt-through damage to the first weld mark 2321, thereby effectively ensuring the connection quality between the electrode terminal 23 and the current collecting member 24.

In some embodiments, continuing to refer to FIG. 7, the second weld mark 2331 surrounds the outside of the first weld mark 2321. The second weld mark 2331 is an annular structure extending along the circumferential direction of the first weld mark 2321 and located on the outer side of the first weld mark 2321.

The second weld mark 2331 is configured to surround the outer side of the first weld mark 2321. The adoption of this structure ensures sufficient welding area between the connecting portion 232 of the electrode terminal 23 and the current collecting member 24, so as to ensure the connection strength between the electrode terminal 23 and the current collecting member 24. In addition, since the current collecting member 24 is welded to the electrode terminal 23 first, and the busbar component 30 is welded to the electrode terminal 23 later, the battery cell 20 adopting this structure is conducive to reducing the assembly difficulty between the electrode terminal 23 and the busbar component 30.

In some embodiments, as shown in FIG. 6 and FIG. 8, a thickness of the connecting portion 232 is D, satisfying 0.5 mm ≤ D ≤ 5 mm.

Specifically, with 0.5 mm ≤ D ≤ 5 mm, along the thickness direction X of the first wall, the thickness range of the connecting portion 232 is from 0.5 mm to 5 mm. Accordingly, along the thickness direction X of the first wall, a distance between the first surface 233 and the bottom surface of the first recess 231 is from 0.5 mm to 5 mm.

As an example, the thickness D of the connecting portion 232 may be 0.5 mm, 0.8 mm, 1 mm, 1.5 mm, 2 mm, 3 mm, or 5 mm, and the like.

The connecting portion 232 of the electrode terminal 23, connected to the current collecting member 24, with a thickness set from 0.5 mm to 5 mm can alleviate the issue of insufficient structural strength of the connecting portion 232 due to the thickness of the connecting portion 232 being too small, so as to reduce the deformation of the connecting portion 232 during the process of mutual assembly with the current collecting member 24, which is conducive to improving the connection quality and connection stability between the connecting portion 232 and the current collecting member 24. In addition, the issue of excessive connection difficulty between the connecting portion 232 and the current collecting member 24 due to excessively large thickness of the connecting portion 232 can be alleviated.

According to some embodiments of this application, as shown in FIG. 4, FIG. 6, and FIG. 8, the first wall 2111 is provided with a lead-out hole 2111a. The electrode terminal 23 includes: a body portion 234, partially passing through the lead-out hole 2111a, where the first recess 231 is provided in the body portion 234; a limiting portion 235, protruding from an outer peripheral surface of the body portion 234, where along the thickness direction X of the first wall, the limiting portion 235 is located on a side of the first wall 2111 facing away from the electrode assembly 22; and a riveting portion 236, protruding from the outer peripheral surface of the body portion 234, where along the thickness direction X of the first wall, the riveting portion 236 is located on a side of the first wall 2111 facing the electrode assembly 22.

Part of the body portion 234 passes through the lead-out hole 2111a, and along the thickness direction X of the first wall, two ends of the body portion 234 respectively extend out of both sides of the first wall 2111. Along the thickness direction X of the first wall, an end surface of the body portion 234 facing away from the electrode assembly 22 is flush with a surface of the limiting portion 235 facing away from the electrode assembly 22, and the end surface of the body portion 234 facing away from the electrode assembly 22 and the surface of the limiting portion 235 facing away from the electrode assembly 22 together define the first surface 233 configured to connect to the busbar component 30 within the battery 100.

The limiting portion 235 protrudes from the outer peripheral surface of the body portion 234. Specifically, the limiting portion 235 is provided on the outer peripheral surface of the body portion 234 and extends in a direction away from a central axis of the body portion 234 along a radial direction of the body portion 234. It should be noted that the radial direction of the body portion 234 is a direction from the outer peripheral surface of the body portion 234 to the central axis of the body portion 234 or a direction from the central axis of the body portion 234 to the outer peripheral surface of the body portion 234.

It should be noted that, as shown in FIG. 7 and FIG. 8, in the embodiments of this application, the busbar component 30 is welded to the limiting portion 235 of the electrode terminal 23 to form a second weld mark 2331, such that the second weld mark 2331 is located in a region of the first surface 233 where the limiting portion 235 is located. This structure enables the second weld mark 2331 to be far away from the connecting portion 232 of the electrode terminal 23 used for connecting to the current collecting member 24, so as to reduce the interference effect of the second weld mark 2331 on the connecting portion 232. Of course, in other embodiments, the busbar component 30 may alternatively be welded to the connecting portion 232 of the electrode terminal 23 to form the second weld mark 2331, such that the second weld mark 2331 is located in a region of the first surface 233 where the connecting portion 232 is located.

The riveting portion 236 protrudes from the outer peripheral surface of the body portion 234. Specifically, the riveting portion 236 is provided on the outer peripheral surface of the body portion 234 and extends in a direction away from a central axis of the body portion 234 along a radial direction of the body portion 234. It should be noted that the riveting portion 236 is a portion formed by riveting the electrode terminal 23 from the inside of the battery cell 20, such that the electrode terminal 23 has a portion protruding from the outer peripheral surface of the body portion 234 and located on a side of the first wall 2111 facing the electrode assembly 22, and this portion is the riveting portion 236.

It should be noted that, since the riveting portion 236 is a portion formed by riveting the electrode terminal 23, the riveting portion 236 and the body portion 234 are an integral structure. The limiting portion 235 and the body portion 234 may be an integral structure or a separate structure. If the limiting portion 235 and the body portion 234 are an integral structure, the limiting portion 235 and the body portion 234 may be formed by a casting process, a stamping process, or the like; and if the limiting portion 235 and the body portion 234 are a separate structure, the limiting portion 235 may be connected to the outer peripheral surface of the body portion 234 by a welding process, a snapping process, or the like.

In some embodiments, as shown in FIG. 4 and FIG. 6, the battery cell 20 may further include an insulating member 26, where along the thickness direction X of the first wall, part of the insulating member 26 is disposed between the first wall 2111 and the riveting portion 236 of the electrode terminal 23, so as to insulate and isolate the first wall 2111 from the riveting portion 236 of the electrode terminal 23, thereby reducing the risk of a short circuit between the electrode terminal 23 and the first wall 2111.

As an example, the insulating member 26 may be made of plastic, rubber, or silicone.

The battery cell 20 may further include a sealing member 27, where along the thickness direction X of the first wall, at least part of the sealing member 27 is disposed between the first wall 2111 and the limiting portion 235, so as to seal a gap between the first wall 2111 and the limiting portion 235 and insulate and isolate the first wall 2111 from the limiting portion 235.

As an example, the sealing member 27 may be made of various materials such as plastic, rubber, or silicone.

Optionally, as shown in FIG. 6, along the thickness direction X of the first wall, part of the sealing member 27 extends into the lead-out hole 2111a and is located between the body portion 234 and a wall surface of the lead-out hole 2111a, so as to seal a gap between the body portion 234 and the wall surface of the lead-out hole 2111a and insulate and isolate the body portion 234 from the wall surface of the lead-out hole 2111a.

Along the thickness direction X of the first wall, the part of the sealing member 27 extending into the lead-out hole 2111a abuts against a side of the insulating member 26 facing the first wall 2111, so as to enhance the sealing effect of the sealing member 27. This can provide a good sealing effect for the gap between the body portion 234 and the wall surface of the lead-out hole 2111a, and in addition, can provide a good insulating and isolating effect, so as to reduce the risk of a short circuit between the electrode terminal 23 and the first wall 2111.

The electrode terminal 23 is provided with a body portion 234 passing through the lead-out hole 2111a, and a limiting portion 235 and a riveting portion 236 are protrudingly provided on the outer peripheral surface of the body portion 234. The limiting portion 235 and the riveting portion 236 are respectively located on a side of the first wall 2111 facing away from the electrode assembly 22 and a side facing the electrode assembly 22 along the thickness direction X of the first wall, so as to enable riveting fixation of the electrode terminal 23 to the first wall 2111. In addition, the first recess 231 and the riveting portion 236 of the electrode terminal 23 of this structure are both located at an end of the electrode terminal 23 facing the electrode assembly 22, so as to facilitate riveting the electrode terminal 23 from the inside of the battery cell 20, and there is no need to form a riveting groove for riveting at an end of the electrode terminal 23 facing away from the electrode assembly 22, thereby effectively ensuring the connection strength between the electrode terminal 23 and the busbar component 30.

According to some embodiments of this application, as shown in FIG. 6 and FIG. 8, the body portion 234, the limiting portion 235, and the riveting portion 236 are an integrally formed structure.

Accordingly, the electrode terminal 23 is made by an integral forming process. As an example, the riveting portion 236 is a portion of the electrode terminal 23 formed by riveting and protrudes from the outer peripheral surface of the body portion 234, while the limiting portion 235 and the body portion 234 may be formed by a casting process, a stamping process, or the like.

The body portion 234, the limiting portion 235, and the riveting portion 236 are an integrally formed structure. Specifically, the electrode terminal 23 is an integral structure, so that the structural strength of the electrode terminal 23 is enhanced, improving the connection stability and reliability between the electrode terminal 23 and the current collecting member 24 and between the electrode terminal 23 and the busbar component 30, so as to reduce the risk of connection failure of the current collecting member 24 and the busbar component 30 during use, thereby ensuring the use stability of the battery cell 20 and improving the service life of the battery cell 20.

In some embodiments, as shown in FIG. 6, FIG. 7, and FIG. 8, along the thickness direction X of the first wall, a surface of the limiting portion 235 facing away from the first wall 2111 is coplanar with a surface of the body portion 234 facing away from the electrode assembly 22.

The surface of the limiting portion 235 facing away from the first wall 2111 is coplanar with the surface of the body portion 234 facing away from the electrode assembly 22. Specifically, a side of the limiting portion 235 facing away from the first wall 2111 and a side of the body portion 234 facing away from the electrode assembly 22 are flush with each other and located in the same plane, such that the surface of the limiting portion 235 facing away from the first wall 2111 and the surface of the body portion 234 facing away from the electrode assembly 22 together define the first surface 233 of the electrode terminal 23 configured to connect to the busbar component 30.

Arranging the surface of the limiting portion 235 facing away from the first wall 2111 and the surface of the body portion 234 facing away from the electrode assembly 22 to be coplanar with each other enables the surface of an end of the electrode terminal 23 facing away from the electrode assembly 22 to be a flat structure as a whole, which facilitates the connection between the electrode terminal 23 and the busbar component 30 and is conducive to reducing the assembly difficulty between the electrode terminal 23 and the busbar component 30. In addition, the area of a region where the electrode terminal 23 and the busbar component 30 are connected to each other can be effectively increased, and the structural strength and connection stability of the electrode terminal 23 connecting the current collecting member 24 and the busbar component 30 can be effectively enhanced, so as to further reduce the risk of connection failure between the electrode terminal 23 and the busbar component 30 during use.

According to some embodiments of this application, continuing to refer to FIG. 6 and FIG. 8, the first recess 231 includes a first groove 2311 and a second groove 2312, where along the thickness direction X of the first wall, the second groove 2312 is provided on a bottom surface of the first groove 2311, and a bottom of the second groove 2312 is connected to the current collecting member 24. Specifically, the electrode terminal 23 forms a connecting portion 232 connected to the current collecting member 24 at the bottom of the second groove 2312.

The second groove 2312 is provided on the bottom surface of the first groove 2311. Specifically, a dimension of the first groove 2311 in a radial direction of the body portion 234 is larger than a dimension of the second groove 2312, such that the second groove 2312 is recessed into the bottom surface of the first groove 2311, making the first groove 2311 and the second groove 2312 a structure arranged along the thickness direction X of the first wall, and the first groove 2311 is closer to the electrode assembly 22 than the second groove 2312. Accordingly, the first groove 2311 and the second groove 2312 together define the first recess 231 as a stepped groove structure.

It should be noted that the first groove 2311 is a riveting groove formed during the process of riveting the electrode terminal 23 to form the riveting portion 236.

The first recess 231 provided on the body portion 234 of the electrode terminal 23 includes the first groove 2311 and the second groove 2312 arranged along the thickness direction X of the first wall, and the second groove 2312 is provided on the bottom surface of the first groove 2311. This structure facilitates the formation of the riveting portion 236 and the first groove 2311 after the electrode terminal 23 is riveted from inside the battery cell 20, which is conducive to reducing the assembly difficulty of the electrode terminal 23 on the first wall 2111.

According to some embodiments of this application, as shown in FIG. 6 and FIG. 8, along the thickness direction X of the first wall, the limiting portion 235 has a second surface 2351 closest to the electrode assembly 22, and a bottom surface of the first recess 231 is farther away from the electrode assembly 22 than the second surface 2351, or the bottom surface of the first recess 231 is flush with the second surface 2351.

Along the thickness direction X of the first wall, the limiting portion 235 has a second surface 2351 closest to the electrode assembly 22. Specifically, the second surface 2351 is a surface of the limiting portion 235 facing and closest to the electrode assembly 22 along the thickness direction X of the first wall, and the second surface 2351 abuts against the sealing member 27.

The bottom surface of the first recess 231 is farther away from the electrode assembly 22 than the second surface 2351, or the bottom surface of the first recess 231 is flush with the second surface 2351. Specifically, the bottom surface of the first recess 231 may be farther away from the electrode assembly 22 than the second surface 2351 or may be flush with the second surface 2351. Accordingly, along the thickness direction X of the first wall, a distance between the bottom surface of the first recess 231 and the electrode assembly 22 may be greater than a distance between the second surface 2351 and the electrode assembly 22, or the bottom surface of the first recess 231 and the second surface 2351 may be in the same plane. As an example, in FIG. 8, the bottom surface of the first recess 231 is flush with the second surface 2351.

The second surface 2351 of the limiting portion 235 along the thickness direction X of the first wall is arranged to be closer to the electrode assembly 22 than the bottom surface of the first recess 231 or flush with the bottom surface of the first recess 231, which facilitates the reduction of the thickness of the connecting portion 232 and the increase of the thickness of the limiting portion 235, thereby facilitating reducing the connection difficulty between the connecting portion 232 and the current collecting member 24 while ensuring the structural strength of the limiting portion 235.

According to some embodiments of this application, referring to FIG. 6 and FIG. 8 and further to FIG. 9, FIG. 9 is a schematic structural diagram of a current collecting member 24 of a battery cell 20 according to some embodiments of this application. The current collecting member 24 includes a base portion 241 and a protruding portion 242. Along the thickness direction X of the first wall, the base portion 241 is disposed between the electrode assembly 22 and the first wall 2111, and the base portion 241 is connected to the electrode assembly 22. Along the thickness direction X of the first wall, the protruding portion 242 protrudes from the base portion 241 in a direction away from the electrode assembly 22, and at least part of the protruding portion 242 is accommodated within the first recess 231 and connected to the bottom of the first recess 231.

The base portion 241 of the current collecting member 24 is a sheet-like structure and is disposed between the electrode assembly 22 and the first wall 2111 along the thickness direction X of the first wall, so as to play a role in connecting to the electrode assembly 22, thereby achieving electrical connection between the current collecting member 24 and the electrode assembly 22.

Along the thickness direction X of the first wall, part of the insulating member 26 is disposed between the first wall 2111 and the base portion 241 of the current collecting member 24, so as to insulate and isolate the first wall 2111 from the base portion 241 of the current collecting member 24, thereby reducing the risk of a short circuit between the first wall 2111 and the base portion 241 of the current collecting member 24.

Along the thickness direction X of the first wall, the protruding portion 242 protrudes from the base portion 241 in a direction away from the electrode assembly 22. Specifically, the protruding portion 242 protrudes from a side of the base portion 241 facing the electrode terminal 23 along the thickness direction X of the first wall.

At least part of the protruding portion 242 is accommodated within the first recess 231 and connected to the bottom of the first recess 231. Specifically, along the thickness direction X of the first wall, part of the protruding portion 242 is inserted into the first recess 231, and an end of the protruding portion 242 facing away from the electrode assembly 22 is connected to a bottom wall of the first recess 231, so as to enable connection of the protruding portion 242 to the connecting portion 232 of the electrode terminal 23. As an example, the protruding portion 242 is welded to the connecting portion 232 of the electrode terminal 23. Specifically, the protruding portion 242 is welded to the bottom of the first recess 231.

The current collecting member 24 is provided with a base portion 241 and a protruding portion 242 protrudingly provided on a side of the base portion 241 facing away from the electrode assembly 22, and the protruding portion 242 is inserted into the first recess 231 and connected to the bottom of the first recess 231, so as to enable assembly connection between the current collecting member 24 and the electrode terminal 23. The current collecting member 24 adopting this structure facilitates the connection between the current collecting member 24 and the electrode terminal 23, which is conducive to reducing the assembly difficulty between the current collecting member 24 and the electrode terminal 23. In addition, the structure of the protruding portion 242 inserted into the first recess 231 can play a certain guiding and limiting role during the mutual assembly of the current collecting member 24 and the electrode terminal 23, which is conducive to improving the assembly efficiency and assembly quality between the current collecting member 24 and the electrode terminal 23.

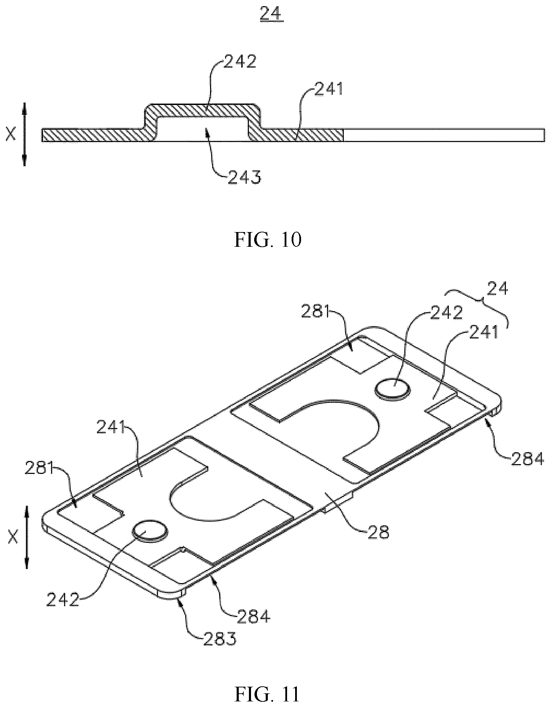

According to some embodiments of this application, referring to FIG. 6 and FIG. 9 and further to FIG. 10, FIG. 10 is a cross-sectional view of a current collecting member 24 of a battery cell 20 according to some embodiments of this application. Along the thickness direction X of the first wall, a second recess 243 is formed on a side of the current collecting member 24 facing the electrode assembly 22, at a position corresponding to the protruding portion 242.

A second recess 243 is formed on a side of the current collecting member 24 facing the electrode assembly 22 and corresponding to the position of the protruding portion 242. Specifically, an interior of the protruding portion forms a cavity, and the cavity extends through a side of the base portion 241 facing the electrode assembly 22 along the thickness direction X of the first wall, so as to form the second recess 243.

As an example, the current collecting member 24 may be made by processes such as stamping or casting, so as to form the protruding portion 242 on the base portion 241, and form the second recess 243 on a side of the current collecting member 24 facing the electrode assembly 22 and corresponding to the position of the protruding portion 242.

It should be noted that, in other embodiments, the protruding portion 242 may alternatively be a solid structure. Specifically, a side of the base portion 241 facing away from the electrode assembly 22 along the thickness direction X of the first wall is protrudingly provided with a protruding portion 242 of a solid structure.

A second recess 243 is provided on a side of the current collecting member 24 facing the electrode assembly 22, at a position corresponding to the protruding portion 242. Specifically, the protruding portion 242 protrudes from a side of the base portion 241 facing away from the electrode assembly 22, and the second recess 243 is formed on a side of the protruding portion 242 facing the electrode assembly 22. The current collecting member 24 adopting this structure facilitates the formation of the protruding portion 242 on the current collecting member 24 by processes such as stamping, which is conducive to reducing the manufacturing difficulty of the current collecting member 24. In addition, the manufacturing material of the current collecting member 24 can be effectively reduced, which is conducive to reducing the manufacturing cost of the battery cell 20 and facilitating reducing the weight of the battery cell 20.

According to some embodiments of this application, referring to FIG. 4 and FIG. 6 and further to FIG. 11, FIG. 11 is a schematic diagram of the connection of a current collecting member 24 and a mounting bracket 28 of a battery cell 20 according to some embodiments of this application. The electrode assembly 22 includes a main body portion 221 and a tab 222, where along the thickness direction X of the first wall, the tab 222 is disposed at an end of the main body portion 221 facing the first wall 2111, and the tab 222 is connected to the current collecting member 24. The battery cell 20 further includes a mounting bracket 28, where along the thickness direction X of the first wall, the mounting bracket 28 is disposed between the first wall 2111 and the main body portion 221, and the current collecting member 24 is mounted on the mounting bracket 28.

The main body portion 221 of the electrode assembly 22 is a component of the battery cell 20 where electrochemical reactions occur. The main body portion 221 of the electrode assembly 22 may include a positive electrode plate, a negative electrode plate, and an isolating film. The main body portion 221 of the electrode assembly 22 may be a wound structure formed by winding a positive electrode plate, an isolating film, and a negative electrode plate, or a laminated structure formed by stacking a positive electrode plate, an isolating film, and a negative electrode plate. The tab 222 of the electrode assembly 22 is a component formed by stacking and connecting regions of the positive electrode plate not coated with a positive electrode active material layer or regions of the negative electrode plate not coated with a negative electrode active material layer.

Along the thickness direction X of the first wall, the tab 222 is disposed at an end of the main body portion 221 facing the first wall 2111. Specifically, an end of the electrode assembly 22 close to the first wall 2111 along the thickness direction X of the first wall is formed with the tab 222.

The mounting bracket 28 is disposed between the first wall 2111 and the main body portion 221 along the thickness direction X of the first wall, playing a role in providing mounting and fixing for the current collecting member 24. The connection between the current collecting member 24 and the mounting bracket 28 may be various, such as snapping, bolting, or bonding. As an example, in FIG. 6, the mounting bracket 28 is disposed between the insulating member 26 and the main body portion 221 of the electrode assembly 22 along the thickness direction X of the first wall.

The mounting bracket 28 is made of an insulating material, which may include various materials such as plastic, rubber, or silicone.

The battery cell 20 is further provided with a mounting bracket 28, and the mounting bracket 28 is located between the first wall 2111 and the main body portion 221 of the electrode assembly 22 along the thickness direction X of the first wall. The current collecting member 24 mounted on the mounting bracket 28 can play a role in fixing and supporting the current collecting member 24, which can reduce the occurrence of shaking or displacement of the current collecting member 24 during use, thereby reducing the risk of connection failure between the current collecting member 24 and the electrode terminal 23 and the tab 222. In addition, when the tab 222 of the electrode assembly 22 is connected to the current collecting member 24 and then assembled into the casing 21, the mounting bracket 28 can stabilize the current collecting member 24, so as to facilitate the assembly connection between the current collecting member 24 and the electrode terminal 23 disposed on the first wall 2111, thereby reducing the assembly difficulty between the current collecting member 24 and the electrode terminal 23 to improve the production efficiency of the battery cell 20 and improving the assembly quality between the current collecting member 24 and the electrode terminal 23 to ensure the production quality of the battery cell 20.

According to some embodiments of this application, continuing to refer to FIG. 4, FIG. 6, and FIG. 11, the mounting bracket 28 is provided with a mounting hole 281, where along the thickness direction X of the first wall, the mounting hole 281 extends through the mounting bracket 28. The current collecting member 24 includes a base portion 241 and a protruding portion 242, where along the thickness direction X of the first wall, the base portion 241 is disposed between the electrode assembly 22 and the first wall 2111 and connected to the tab 222, and the protruding portion 242 protrudes from the base portion 241 in a direction away from the electrode assembly 22 and passes through the mounting hole 281 to connect to the electrode terminal 23, and at least part of the base portion 241 is accommodated within the mounting hole 281.

Along the thickness direction X of the first wall, the mounting hole 281 extends through the mounting bracket 28. Specifically, the mounting hole 281 extends along the thickness direction X of the first wall and through both sides of the mounting bracket 28.

The protruding portion 242 protrudes from the base portion 241 in a direction away from the electrode assembly 22 and passes through the mounting hole 281 to connect to the electrode terminal 23. Specifically, along the thickness direction X of the first wall, the protruding portion 242 is protrudingly provided on a side of the base portion 241 facing away from the electrode assembly 22, and the protruding portion 242 extends into the first recess 231 and is connected to the bottom of the first recess 231.

At least part of the base portion 241 is accommodated within the mounting hole 281. Specifically, the base portion 241 may be partially accommodated within the mounting hole 281 or entirely accommodated within the mounting hole 281. As an example, in FIG. 4 and FIG. 6, the base portion 241 is entirely located within the mounting hole 281 along the thickness direction X of the first wall, and a side of the base portion 241 facing the electrode assembly 22 is connected to the tab 222.

As an example, in FIG. 11, the shape of the mounting hole 281 is rectangular, but of course, the shape of the mounting hole 281 is not limited thereto, and the shape of the mounting hole 281 may alternatively be circular, elliptical, or pentagonal, and the like.

A mounting hole 281 for accommodating the base portion 241 of the current collecting member 24 is provided on the mounting bracket 28, and the mounting hole 281 extends through both sides of the mounting bracket 28 along the thickness direction X of the first wall, enabling at least part of the base portion 241 of the current collecting member 24 to be accommodated within the mounting hole 281 and the protruding portion 242 of the current collecting member 24 to pass through the mounting hole 281 and connect to the electrode terminal 23, thereby reducing the connection difficulty between the current collecting member 24 and the electrode terminal 23 and the tab 222 while enabling the base portion 241 of the current collecting member 24 and the mounting bracket 28 to share part of the space along the thickness direction X of the first wall. This is conducive to improving the internal space utilization rate of the battery cell 20, thereby effectively enhancing the energy density of the battery cell 20.

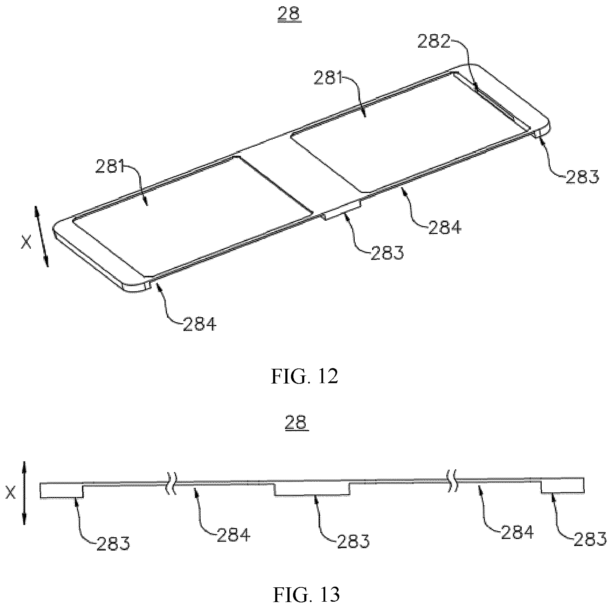

According to some embodiments of this application, referring to FIG. 11 and further to FIG. 12, FIG. 12 is a schematic structural diagram of a mounting bracket 28 of a battery cell 20 according to some embodiments of this application. A slot 282 is provided on a wall surface of the mounting hole 281, and the base portion 241 is inserted into the slot 282.

Part of the base portion 241 of the current collecting member 24 is inserted into the slot 282, so as to mount the current collecting member 24 on the mounting bracket 28. Of course, in other embodiments, the current collecting member 24 may alternatively be connected to the wall surface of the mounting hole 281 by bonding, bolting, or the like, so as to enable mounting of the current collecting member 24 on the mounting bracket 28.

A slot 282 for inserting the base portion 241 of the current collecting member 24 is provided on the wall surface of the mounting hole 281, so as to enable connection of the current collecting member 24 to the wall surface of the mounting hole 281, thereby fixing the current collecting member 24 to the mounting bracket 28. This structure facilitates accommodating the base portion 241 of the current collecting member 24 into the mounting hole 281 and facilitates the assembly of the base portion 241, which is conducive to reducing the assembly difficulty between the current collecting member 24 and the mounting bracket 28.

According to some embodiments of this application, as shown in FIG. 4, FIG. 11, and FIG. 12, the current collecting member 24 and the electrode terminal 23 are each provided in a quantity of two, the mounting bracket 28 is provided with two mounting holes 281, and the current collecting member 24, the mounting hole 281, and the electrode terminal 23 are arranged in a one-to-one correspondence; and the electrode assembly 22 has two tabs 222 with opposite polarities, and the two tabs 222 are respectively connected to the two current collecting members 24, thereby enabling the mounting bracket 28 to simultaneously stabilize two current collecting members 24 with opposite polarities, so as to facilitate the assembly of the two current collecting members 24 with the two electrode terminals 23.

The electrode assembly 22 has two tabs 222 with opposite polarities, and the two tabs 222 are respectively used to output or input the positive and negative electrodes of the electrode assembly 22.

The current collecting member 24 and the electrode terminal 23 are each provided in a quantity of two, and the current collecting member 24, the mounting hole 281, and the electrode terminal 23 are arranged in a one-to-one correspondence. Specifically, each current collecting member 24 is connected to one electrode terminal 23, each current collecting member 24 is accommodated within one mounting hole 281 of the mounting bracket 28, and the two tabs 222 are respectively connected to the two current collecting members 24. Accordingly, the two current collecting members 24 and the two electrode terminals 23 respectively serve as the positive output pole and the negative output pole of the battery cell 20.

As an example, in FIG. 11 and FIG. 12, the two mounting holes 281 are arranged along a length direction of the mounting bracket 28, and correspondingly, the two current collecting members 24 are spaced apart and oppositely arranged along the length direction of the mounting bracket 28, and the length direction of the mounting bracket 28 is perpendicular to the thickness direction X of the first wall, so as to facilitate the assembly of the current collecting member 24 and facilitate the assembly connection between the current collecting member 24 and the tab 222.

Both the current collecting member 24 and the mounting hole 281 provided on the mounting bracket 28 are provided in a quantity of two, and each current collecting member 24 is assembled into one mounting hole 281, enabling the mounting bracket 28 to simultaneously stabilize two current collecting members 24 with opposite polarities, so as to facilitate the assembly of the two current collecting members 24 with the two electrode terminals 23.

According to some embodiments of this application, as shown in FIG. 6, FIG. 11, and FIG. 12, along the thickness direction X of the first wall, the mounting bracket 28 has an abutting surface 283 facing the main body portion 221, and the abutting surface 283 abuts against the main body portion 221.

The mounting bracket 28 has an abutting surface 283 facing the main body portion 221, and the abutting surface 283 abuts against the main body portion 221. Specifically, the mounting bracket 28 abuts against the main body portion 221 of the electrode assembly 22 along the thickness direction X of the first wall.

The first surface 233 of the mounting bracket 28 facing the main body portion 221 abuts against the main body portion 221 of the electrode assembly 22, enabling the main body portion 221 to provide support for the mounting bracket 28, thereby enhancing the structural stability of the mounting bracket 28 assembled between the main body portion 221 and the first wall 2111. This further alleviates the occurrence of shaking or displacement of the current collecting member 24 within the casing 21, thereby facilitating further improving the connection quality between the current collecting member 24 and the electrode terminal 23.

According to some embodiments of this application, referring to FIG. 11 and FIG. 12 and further to FIG. 13, FIG. 13 is a front view of a mounting bracket 28 of a battery cell 20 according to some embodiments of this application. The abutting surface 283 is provided with a relief groove 284, and the relief groove 284 is configured to accommodate the tab 222.

The abutting surface 283 is provided with a relief groove 284. Specifically, a surface of the mounting bracket 28 abutting against the main body portion 221 of the electrode assembly 22 along the thickness direction X of the first wall is provided with the relief groove 284, such that the tab 222 can be accommodated within the relief groove 284, so as to avoid the tab 222.

As an example, the electrode assembly 22 has two tabs 222 with opposite polarities, and correspondingly, the abutting surface 283 of the mounting bracket 28 is provided with two relief grooves 284, and each relief groove 284 is configured to avoid one tab 222.

In some embodiments, as shown in FIG. 13, a thickness of the mounting bracket 28 along the thickness direction X of the first wall is from 1 mm to 10 mm. The mounting bracket 28 with a thickness set from 1 mm to 10 mm can alleviate the issue of insufficient structural strength of the mounting bracket 28 due to the thickness of the mounting bracket 28 being too small, so as to reduce the risk of the mounting bracket 28 breaking during assembly or use and improve the support and stabilization effect on the current collecting member 24. In addition, the issue of the mounting bracket 28 occupying too much internal space of the battery cell 20 due to the thickness of the mounting bracket 28 being too large can be alleviated, so as to enhance the energy density of the battery cell 20.

The thickness of the mounting bracket 28 along the thickness direction X of the first wall. Specifically, a distance between the abutting surface 283 of the mounting bracket 28 and a surface of the mounting bracket 28 facing away from the main body portion 221 along the thickness direction X of the first wall.

As an example, the thickness of the mounting bracket 28 along the thickness direction X of the first wall may be 1 mm, 1.5 mm, 2 mm, 3 mm, 5 mm, 8 mm, 10 mm, or the like.

A relief groove 284 for accommodating the tab 222 is provided on the first surface 233 of the mounting bracket 28 facing the main body portion 221 to reduce the squeezing effect of the mounting bracket 28 on the tab 222, thereby reducing the risk of the tab 222 being damaged or inserted back into the main body portion 221.

According to some embodiments of this application, as shown in FIG. 4 and FIG. 6, the battery cell 20 further includes an insulating member 26, where along the thickness direction X of the first wall, the insulating member 26 is disposed between the first wall 2111 and the mounting bracket 28, so as to insulate and isolate the first wall 2111 and the current collecting member 24.

Part of the insulating member 26 is located between the first wall 2111 and the riveting portion 236 of the electrode terminal 23 along the thickness direction X of the first wall, such that when the riveting portion 236 of the electrode terminal 23 is riveted and fixed to the first wall 2111, the insulating member 26 can be fastened to the first wall 2111, so as to reduce the occurrence of shaking of the insulating member 26 during use, and the insulating member 26 can play a role in insulating and isolating the riveting portion 236 of the electrode terminal 23 and the first wall 2111, so as to reduce the risk of a short circuit between the riveting portion 236 and the first wall 2111.

An insulating member 26 is provided between the first wall 2111 and the mounting bracket 28, so that the insulating member 26 can insulate and isolate the first wall 2111 and the current collecting member 24, thereby reducing the risk of a short circuit between the first wall 2111 and the current collecting member 24, so as to enhance the use safety of the battery cell 20.

According to some embodiments of this application, as shown in FIG. 3, FIG. 4, and FIG. 5, the casing 21 includes a housing 211 and an end cover 212. The housing 211 includes a sidewall 2112 and the first wall 2111 that are integrally formed, where the sidewall 2112 surrounds the first wall 2111, and along the thickness direction X of the first wall, one end of the sidewall 2112 is connected to the first wall 2111, and the other end encloses an opening 2114, the sidewall 2112 and the first wall 2111 together defining an accommodating cavity 2113 for accommodating the electrode assembly 22. The end cover 212 closes the opening 2114.

The housing 211 includes the sidewall 2112 and first wall 2111 that are integrally formed. Specifically, the sidewall 2112 and the first wall 2111 are an integrally formed structure. The housing 211 is made by integral forming processes such as stamping or casting. The housing 211 adopting this structure can enhance the structural strength of the housing 211 itself, so as to alleviate the issue of cracks appearing in the housing 211 after a force caused by pulling or twisting of the busbar component 30 on the electrode terminal 23 is transmitted to the first wall 2111 through the electrode terminal 23, thereby effectively reducing the risk of leakage of the battery cell 20 during use, which is conducive to improving the use safety and service life of the battery cell 20.

Along the thickness direction X of the first wall, one end of the sidewall 2112 is connected to the first wall 2111, the other end encloses an opening 2114, and the end cover 212 closes the opening 2114. Specifically, the first wall 2111 for mounting the electrode terminal 23 is a bottom wall of the housing 211 disposed opposite to the end cover 212 along the thickness direction X of the first wall. Of course, in other embodiments, the first wall 2111 may alternatively be the sidewall 2112 of the housing 211.

It should be noted that the structure of the battery cell 20 is not limited thereto. In some embodiments, the casing 21 may include a housing 211 and an end cover 212, an accommodating cavity 2113 with an opening 2114 is formed inside the housing 211, the electrode assembly 22 is accommodated within the accommodating cavity 2113, and the end cover 212 closes the opening 2114. The end cover 212 is the first wall 2111. With the first wall 2111 for mounting the electrode terminal 23 being configured as the end cover 212 for closing the opening 2114 of the housing 211, this structure facilitates assembling the electrode terminal 23 on the first wall 2111 and is conducive to reducing the assembly difficulty between the current collecting member 24 and the electrode terminal 23 and the electrode assembly 22, thereby improving the production efficiency of the battery cell 20. Accordingly, in this embodiment, the first wall 2111 may also be the end cover 212 of the casing 21 for closing the opening 2114 of the housing 211. Specifically, the electrode terminal 23 is mounted on the end cover 212 of the casing 21 of the battery cell 20.

The first wall 2111 for mounting the electrode terminal 23 is arranged as a wall of the housing 211 disposed opposite to the end cover 212 along the thickness direction X of the first wall. This structure enables the first wall 2111 equipped with the electrode terminal 23 to be far away from the end cover 212 of the casing 21, so that there is no direct connection relationship between the first wall 2111 and the end cover 212, thereby further reducing the transmission of a force generated by pulling or twisting of the busbar component 30 on the electrode terminal 23 to the end cover 212, so as to reduce the risk of connection failure between the end cover 212 and the housing 211, thereby facilitating further reducing the risk of leakage of the battery cell 20 during use.

According to some embodiments of this application, this application further provides a battery 100 including the battery cell 20 according to any one of the above solutions.

According to some embodiments of this application, this application further provides an electric apparatus including the battery 100 according to any one of the above solutions, and the battery 100 is configured to provide electric energy to the electric apparatus.

The electric apparatus may be any device or system using the battery 100 mentioned above.

According to some embodiments of this application, as shown in FIG. 3 to FIG. 13, this application provides a battery cell 20. The battery cell 20 includes a casing 21, an electrode assembly 22, an electrode terminal 23, a current collecting member 24, and a mounting bracket 28. The casing 21 includes a housing 211 and an end cover 212, and the housing 211 includes a sidewall 2112 and a first wall 2111 that are integrally formed. The sidewall 2112 surrounds the first wall 2111, and along the thickness direction X of the first wall, one end of the sidewall 2112 is connected to the first wall 2111, the other end encloses an opening 2114, and the sidewall 2112 and the first wall 2111 together defining an accommodating cavity 2113. The end cover 212 closes the opening 2114. The electrode assembly 22 is accommodated within the accommodating cavity 2113. The electrode assembly 22 includes a main body portion 221 and a tab 222, and along the thickness direction X of the first wall, the tab 222 is disposed at an end of the main body portion 221 facing the first wall 2111. The electrode terminal 23 is riveted to the first wall 2111, and along the thickness direction X of the first wall, an end of the electrode terminal 23 facing the electrode assembly 22 is provided with a first recess 231. The electrode terminal 23 has a first surface 233 farthest from the electrode assembly 22, the first surface 233 is configured to connect to a busbar component 30, a connecting portion 232 is formed between the first surface 233 and a bottom surface of the first recess 231, and the first surface 233 is a flat surface. The connecting portion 232 is welded to the current collecting member 24 and forms a first weld mark 2321, and along the thickness direction X of the first wall, the first weld mark 2321 extends to the first surface 233. The first wall 2111 is provided with a lead-out hole 2111a. The electrode terminal 23 includes a body portion 234, a limiting portion 235, and a riveting portion 236 that are integrally formed. The body portion 234 passes through the lead-out hole 2111a, and the first recess 231 is provided in the body portion 234. The limiting portion 235 protrudes from an outer peripheral surface of the body portion 234, and along the thickness direction X of the first wall, the limiting portion 235 is located on a side of the first wall 2111 facing away from the electrode assembly 22. The riveting portion 236 protrudes from the outer peripheral surface of the body portion 234, and along the thickness direction X of the first wall, the riveting portion 236 is located on a side of the first wall 2111 facing the electrode assembly 22. Along the thickness direction X of the first wall, a surface of the limiting portion 235 facing away from the first wall 2111 is coplanar with a surface of the body portion 234 facing away from the electrode assembly 22, so as to together define the first surface 233 of the electrode terminal 23 configured to connect to the busbar component 30. The current collecting member 24 includes a base portion 241 and a protruding portion 242. Along the thickness direction X of the first wall, the base portion 241 is disposed between the electrode assembly 22 and the electrode terminal 23, the base portion 241 is connected to the tab 222 of the electrode assembly 22, the protruding portion 242 protrudes from the base portion 241 in a direction away from the electrode assembly 22, and at least part of the protruding portion 242 is accommodated within the first recess 231 and connected to the connecting portion 232. Along the thickness direction X of the first wall, a second recess 243 is formed on a side of the current collecting member 24 facing the electrode assembly 22, at a position corresponding to the protruding portion 242. Along the thickness direction X of the first wall, the mounting bracket 28 is disposed between the first wall 2111 and the main body portion 221, and the mounting bracket 28 is provided with a mounting hole 281. The mounting hole 281 extends through both sides of the mounting bracket 28 along the thickness direction X of the first wall, a slot 282 is provided on a wall surface of the mounting hole 281, the base portion 241 of the current collecting member 24 is accommodated within the mounting hole 281 and connected to the tab 222, and part of the base portion 241 of the current collecting member 24 is inserted into the slot 282. Along the thickness direction X of the first wall, the mounting bracket 28 has an abutting surface 283 facing the main body portion 221, the abutting surface 283 abuts against the main body portion 221, and the abutting surface 283 is provided with a relief groove 284, and the relief groove 284 is configured to accommodate the tab 222.

It should be noted that, without conflict, the embodiments and features in the embodiments in this application may be combined with each other.

The foregoing descriptions are merely preferred embodiments of this application which are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A battery cell, comprising:
a casing having a first wall;
an electrode assembly accommodated within the casing;
an electrode terminal disposed on the first wall, wherein along a thickness direction of the first wall, an end of the electrode terminal facing the electrode assembly is provided with a first recess, and an end of the electrode terminal facing away from the electrode assembly is configured to connect to a busbar component; and
a current collecting member connected to the electrode assembly, wherein at least part of the current collecting member is accommodated within the first recess and connected to a bottom of the first recess, so as to form electrical connection between the electrode assembly and the electrode terminal.

2. The battery cell according to claim 1, wherein along the thickness direction of the first wall, the electrode terminal has a first surface farthest from the electrode assembly, the first surface is configured to connect to the busbar component, a connecting portion is formed between the first surface and a bottom surface of the first recess, and the connecting portion is connected to the current collecting member.

3. The battery cell according to claim 2, wherein the first surface is a flat surface.

4. The battery cell according to claim 2 or 3, wherein the connecting portion is welded to the current collecting member and forms a first weld mark, and along the thickness direction of the first wall, the first weld mark extends to the first surface.

5. The battery cell according to claim 4, wherein the first surface is configured to be welded to the busbar component and forms a second weld mark on the first surface, and along the thickness direction of the first wall, a projection of the second weld mark on the first surface does not overlap with a projection of the first weld mark on the first surface.

6. The battery cell according to claim 5, wherein the second weld mark surrounds the outside of the first weld mark.

7. The battery cell according to any one of claims 1 to 6, wherein the first wall is provided with a lead-out hole; and
the electrode terminal comprises:
a body portion, partially passing through the lead-out hole, wherein the first recess is provided in the body portion;
a limiting portion, protruding from an outer peripheral surface of the body portion, wherein along the thickness direction of the first wall, the limiting portion is located on a side of the first wall facing away from the electrode assembly; and
a riveting portion, protruding from the outer peripheral surface of the body portion, wherein along the thickness direction of the first wall, the riveting portion is located on a side of the first wall facing the electrode assembly.

8. The battery cell according to claim 7, wherein the body portion, the limiting portion, and the riveting portion are an integrally formed structure.

9. The battery cell according to claim 7 or 8, wherein along the thickness direction of the first wall, a surface of the limiting portion facing away from the first wall is coplanar with a surface of the body portion facing away from the electrode assembly.

10. The battery cell according to claim 8 or 9, wherein the first recess comprises a first groove and a second groove, wherein along the thickness direction of the first wall, the second groove is provided on a bottom surface of the first groove, and a bottom of the second groove is connected to the current collecting member.

11. The battery cell according to any one of claims 8 to 10, wherein along the thickness direction of the first wall, the limiting portion has a second surface closest to the electrode assembly, and a bottom surface of the first recess is farther away from the electrode assembly than the second surface, or the bottom surface of the first recess is flush with the second surface.

12. The battery cell according to any one of claims 1 to 11, wherein the current collecting member comprises:
a base portion, wherein along the thickness direction of the first wall, the base portion is disposed between the electrode assembly and the first wall, and the base portion is connected to the electrode assembly; and
a protruding portion, wherein along the thickness direction of the first wall, the protruding portion protrudes from the base portion in a direction away from the electrode assembly, and at least part of the protruding portion is accommodated within the first recess and connected to the bottom of the first recess.

13. The battery cell according to claim 12, wherein along the thickness direction of the first wall, a second recess is formed on a side of the current collecting member facing the electrode assembly, at a position corresponding to the protruding portion.

14. The battery cell according to any one of claims 1 to 13, wherein the electrode assembly comprises a main body portion and a tab, wherein along the thickness direction of the first wall, the tab is disposed at an end of the main body portion facing the first wall, and the tab is connected to the current collecting member; and
the battery cell further comprises a mounting bracket, wherein the mounting bracket is disposed between the first wall and the main body portion, and the current collecting member is mounted on the mounting bracket.

15. The battery cell according to claim 14, wherein the mounting bracket is provided with a mounting hole, wherein along the thickness direction of the first wall, the mounting hole extends through the mounting bracket; and
the current collecting member comprises a base portion and a protruding portion, wherein along the thickness direction of the first wall, the base portion is disposed between the electrode assembly and the first wall and connected to the tab, and the protruding portion protrudes from the base portion in a direction away from the electrode assembly and passes through the mounting hole to connect to the electrode terminal;
wherein at least part of the base portion is accommodated within the mounting hole.

16. The battery cell according to claim 15, wherein a slot is provided on a wall surface of the mounting hole, and the base portion is inserted into the slot.

17. The battery cell according to claim 15 or 16, wherein the current collecting member and the electrode terminal are each provided in a quantity of two, the mounting bracket is provided with two mounting holes, and the current collecting member, the mounting hole, and the electrode terminal are arranged in a one-to-one correspondence; and
the electrode assembly has two tabs with opposite polarities, and the two tabs are respectively connected to the two current collecting members.

18. The battery cell according to any one of claims 14 to 17, wherein along the thickness direction of the first wall, the mounting bracket has an abutting surface facing the main body portion, and the abutting surface abuts against the main body portion.

19. The battery cell according to claim 18, wherein the abutting surface is provided with a relief groove, and the relief groove is configured to accommodate the tabs.

20. The battery cell according to any one of claims 14 to 19, wherein the battery cell further comprises:
an insulating member, wherein along the thickness direction of the first wall, the insulating member is disposed between the first wall and the mounting bracket, so as to insulate and isolate the first wall from the current collecting member.

21. The battery cell according to any one of claims 1 to 20, wherein the casing comprises:
a housing comprising a sidewall and the first wall that are integrally formed, wherein the sidewall surrounds the first wall, and along the thickness direction of the first wall, one end of the sidewall is connected to the first wall, and the other end encloses an opening, the sidewall and the first wall together defining an accommodating cavity for accommodating the electrode assembly; and
an end cover closing the opening.

22. The battery cell according to any one of claims 1 to 20, wherein the casing comprises:
a housing, wherein an accommodating cavity with an opening is formed inside the housing, and the electrode assembly is accommodated within the accommodating cavity; and
an end cover closing the opening;
wherein the end cover is the first wall.

23. A battery comprising the battery cell according to any one of claims 1 to 22.

24. An electric apparatus comprising the battery according to claim 23.
